# EUROPEAN PATENT APPLICATION

(11) **EP 4 597 352 A1**
(43) Date of publication of application: **06.08.2025**
(21) Application number: 25155364.0
(22) Date of filing: 31.01.2025
(51) Int. Cl.: G06F 30/27, G06F 30/394, G06N 3/006, G06F 115/12

(54) **ELECTRICAL CIRCUIT DESIGN USING ATTENTION NETWORKS**

(30) Priority: 01.02.2024 GB 202401337
(71) Applicant: InstaDeep Ltd, London W2 1AY (GB)
(72) Inventor: Lourie, Jacob, London, W2 1AY (GB); Kerkeni, Amine, London, W2 1AY (GB); Kalloniatis, Tristan, London, W2 1AY (GB)
(74) Representative: EIP

(57) **Abstract**

A method of generating output data for manufacturing an electrical circuit is provided. A system and storage medium for implementing the method are also provided. The method includes obtaining input data representing an electrical circuit, and processing the input data to generate a first encoding for circuit elements and a second encoding for agents. An attention network, that implements two attention mechanisms, one for the first encoding and one for the second encoding, is provided. A process of selecting routing component characteristics is performed iteratively, using the attention network to determine routes for connecting circuit elements. Output data for manufacturing the electrical circuit is generated based on the selected routing component characteristics.

## Description

### Technical Field

The present invention relates to electrical circuit design and generating data for manufacturing electrical circuits. In particular, but not exclusively, the present invention relates to the use of attention networks in routing electrical circuits.

### Background

Routing in electrical circuit boards involves the process of determining connections between various components on a Printed Circuit Board (PCB). This is typically done after selecting positions for the components on the board. Routing involves drawing the paths for electrical current, known as traces, which connect different components such as resistors, capacitors, and integrated circuits. These traces must be carefully planned to ensure electrical efficiency and to minimize interference and signal loss. The process often requires consideration of the optimal path for each connection, the width of the traces, the avoidance of crosstalk between signals, and adherence to the specific electrical and physical constraints of the PCB design. Some PCB design software may assist in this process helping designers manually plot each trace efficiently. When routing an electrical circuit, the goal is typically to create a board that functions correctly and reliably under its intended operating conditions.

PCBs typically comprise a laminated sandwich structure of conductive and insulating layers. The conductive layers are constructed with a pattern of traces, planes, and other features etched from one or more sheet layers of copper, that are configured to connect the electrical components. The principles of determining routing for PCBs are also applicable to other applications, such as wire boards in which the connections between various components may be manufactured by applying conductive material, or wires, to a board after the relevant electrical components, such as resistors, capacitors, and chips have been added.

### Summary

According to a first aspect of the present disclosure, there is provided a method of generating output data for manufacturing an electrical circuit, the method comprising; obtaining input data representing an electrical circuit comprising a plurality of circuit elements and one or more nets, each of the one or more nets representing a connection that is to be made between two or more circuit elements, and wherein the input data represents a respective position of each of the plurality of circuit elements in the electrical circuit; processing the input data to generate a first encoding of the electrical circuit based on positions of respective circuit elements represented in the input data and the one or more nets; providing a first agent for determining the connection between two or more circuit elements for a first net of the one or more nets, wherein the first agent is configured to select characteristics of one or more routing components, whereby to connect a respective two or more circuit elements of the first net; generating a second encoding of two or more agents, the two or more agents including at least the first agent and a second agent, wherein the second agent is configured to determine the connection between two or more circuit elements for a second, different, net of the one or more nets; providing an attention network configured to generate action selection data for the first agent, wherein the attention network implements a first attention mechanism for the first encoding, and a second attention mechanism for the second encoding; iteratively performing a process comprising: processing the first encoding and the second encoding using the attention network to generate action selection data for the first agent using the first agent to select characteristics of a routing component using the action selection data; and updating the first encoding and the second encoding based on the selected characteristics of the routing component, wherein the process is performed until the connection in the first net is satisfied by the routing components; and generating output data for manufacturing the electrical circuit based on the first encoding of the electrical circuit.

According to a second aspect of the present disclosure, there is provided a system for generating output data for manufacturing an electrical circuit, the system comprising at least one processor and storage comprising computer-executable instructions which, when executed by the at least one processor cause the at least one processor to: obtain input data representing an electrical circuit comprising a plurality of circuit elements and one or more nets, each of the one or more nets representing a connection that is to be made between two or more circuit elements, and wherein the input data represents a respective position of each of the plurality of circuit elements in the electrical circuit; process the input data to generate a first encoding of the electrical circuit based on positions of respective circuit elements represented in the input data and the one or more nets; provide a first agent for determining the connection between two or more circuit elements for a first net of the one or more nets, wherein the first agent is configured to select characteristics of one or more routing components, whereby to connect a respective two or more circuit elements of the first net; generate a second encoding one of two or more agents, the two or more agents including at least the first agent and a second agent, wherein the second agent is configured to determine the connection between two or more circuit elements for a second, different, net of the one or more nets provide an attention network configured to generate action selection data for the first agent, wherein the attention network implements a first attention mechanism for the first encoding, and a second attention mechanism for the second encoding; iteratively perform a process comprising: process the first encoding and the second encoding using the attention network to generate action selection data for the first agent; use the first agent to select characteristics of a routing component using the action selection data; and update the first encoding and the second encoding based on the selected characteristics of the routing component, wherein the process is performed until the connection in the first net is satisfied by the routing components; and generating output data for manufacturing the electrical circuit based on the first encoding of the electrical circuit.

According to a third aspect of the present disclosure there is provided a non-transitory computer-readable storage medium comprising computer-executable instructions which, when executed by one or more processor, cause the processor to: obtain input data representing an electrical circuit comprising a plurality of circuit elements and one or more nets, each of the one or more nets representing a connection that is to be made between two or more circuit elements, and wherein the input data represents a respective position of each of the plurality of circuit elements in the electrical circuit; process the input data to generate a first encoding of the electrical circuit based on positions of respective circuit elements represented in the input data and the one or more nets; providing a first agent for determining the connection between two or more circuit elements for a first net of the one or more nets, wherein the first agent is configured to select characteristics of one or more routing components, whereby to connect a respective two or more circuit elements of the first net; generate a second encoding of two or more agents, the two or more agents including at least the first agent and a second agent, wherein the second agent is configured to determine the connection between two or more circuit elements for a second, different, net of the one or more nets; provide an attention network configured to generate action selection data for the first agent, wherein the attention network implements a first attention mechanism for the first encoding, and a second attention mechanism for the second encoding; iteratively perform a process comprising: process the first encoding and the second encoding using the attention network to generate action selection data for the first agent; use the first agent to select characteristics of a routing component using the action selection data, the routing component being for connecting two or more circuit elements in the respective net; and update the first encoding and the second encoding based on the selected characteristics of the component, wherein the process is performed until the connection in the first net is satisfied by the routing components; and generating output data for manufacturing the electrical circuit based on the first encoding of the electrical circuit.

Further features and advantages will become apparent from the following description of preferred embodiments, given by way of example only, which is made with reference to the accompanying drawings.

### Brief Description of the Drawings

Figure 1 is a schematic diagram showing a system according to examples;
Figure 2 is a flow chart showing a method for generating output data for manufacturing an electrical circuit according to examples;
Figure 3 is a schematic flow diagram showing the method for generating output data for manufacturing an electrical circuit according to examples;
Figure 4A is schematic diagram showing an electrical circuit represented by input data according to examples;
Figure 4B is a table showing which circuit elements in the electrical circuit belong to which nets according to examples;
Figure 5 is a schematic diagram showing a process in the method being performed iteratively, according to examples;
Figure 6 is schematic diagram showing action selection data according to examples;
Figure 7 is a schematic diagram showing a process in the method being performed iteratively, and in which a predicted reward value is generated, according to examples;
Figure 8 is a schematic diagram showing a process for generating the first encoding according to examples;
Figure 9 is a schematic diagram shown the updating of a matrix representation to include an additional component according to examples;
Figure 10 is a schematic flow diagram showing a detailed process for generating a first encoding according to examples;
Figure 11 is a schematic diagram showing the grouping of objects in a net according to example;
Figure 12 is a schematic diagram showing the application of a one-dimensional convolutional neural network to object coordinates as part of the process for generating the first encoding according to examples;
Figure 13 is a schematic flow diagram showing a detailed process for generating a second encoding according to examples;
Figure 14 is a schematic diagram showing an example overview of an attention network;
Figure 15 is a schematic diagram showing a detailed example of an attention network according to a first example of the first and second attention mechanisms;
Figure 16 is a schematic diagram showing a detailed example of an attention network according to a second example of the first and second attention mechanisms; and
Figure 17 is a schematic diagram of a non-transitory computer-readable storage medium according to examples.

### Detailed Description

Electrical circuit design encompasses a wide range of challenges that are important to the success and functionality of the final product. Some of these challenges include:

Complexity and Miniaturization: Modern electronic devices demand increasingly complex circuits in smaller spaces. Designing such compact and intricate circuits without compromising performance or reliability is a significant challenge.

Thermal Management: As electronic components operate, they generate heat. Efficiently managing and dissipating this heat, especially in densely packed circuits, is crucial to prevent overheating and ensure longevity. Efficient routing must consider thermal management to avoid hotspots and ensure even heat distribution, which is challenging in densely packed boards.

Signal Integrity: High-speed circuits can suffer from issues like noise, crosstalk, and electromagnetic interference (EMI), leading to signal integrity problems. Ensuring clean and stable signals in a crowded PCB environment is a complex task. Signal integrity can often be affected by the positioning and crowding of electrical routing.

Layer Management: Multilayer PCBs offer more routing space but add complexity in managing connections between layers, ensuring signal integrity, and maintaining manufacturability.

Design Rules and Constraints: Adhering to specific design rules and constraints, such as minimum trace width/spacing, via sizes, and clearance requirements, adds to the complexity. These rules are often dictated by manufacturing capabilities and reliability standards.

Analog and Digital Mixing: In PCBs that mix analogue and digital signals, careful routing is necessary to prevent digital noise from affecting analogue signals, which requires strategic placement and isolation techniques.

High-Frequency Circuits: High-frequency designs (RF circuits, for example) have unique requirements, such as controlled impedance, minimized signal path lengths, and shielding, which make routing more complex.

Manufacturability and Reliability: The routing must also consider the manufacturability of the PCB and the long-term reliability of the connections, which includes accounting for potential physical stresses and environmental factors.

Environmental and Durability Considerations: Circuits must be designed to withstand environmental stresses like temperature variations, humidity, and mechanical shocks or vibrations.

Due to the various considerations when designing electrical circuits, the process is often resource intensive, time consuming, and expensive. Developing the ability to determine routing for electrical circuits quickly and efficiently would enable rapid prototyping and fast development of electrical circuits. Additionally, such technology may significantly reduce the overheads involved in designing and manufacturing electrical circuits.

Certain examples described herein aim to provide a method and systems for designing electrical circuits, and generating output data for manufacturing these electrical circuits, that leverage attention networks that are specifically configured and adapted for application to the problem of routing electrical circuits. In addition, the use of two separate attention mechanisms is leveraged to provide a system and method that is capable of simultaneously accounting for both (A) the topography and layout of the electrical circuit, and (B) the positions and potential actions of multiple agents when determining the routing between certain circuit elements. While connections in an electrical circuit are typically between two components, such as resistors, capacitors, chips, and so forth, the methods described here may be applied to determining routing between circuit elements that include elements that aren't typically considered to be components. For example, there may be traces, vias, and other elements in an electrical circuit that may not typically be considered to be components, but for which routing may be determined.

When a connection between two circuit elements on an electrical circuit is specified, or selected, the freedom in selecting further routing between other elements of the electrical circuit is reduced. This is because the traces, also referred to as "routing", between different pairs of circuit elements cannot be crossed (unless via a different layer of a multilayer PCB). As such, once a trace has been selected for the electrical circuit, the direction, length, and position of further traces is constrained. Additionally, there may be some restrictions on the proximity of routing for different nets to mitigate potential interference. By implementing two attention mechanisms as specified above, it is possible to account for routing that is being determined between several pairs of circuit elements simultaneously, and therefore provide more efficient routing overall.

Attention networks provide mechanisms that enable models to focus attention on certain parts of a problem more than others. The use of attention networks in image generation, and large language models, has been shown to provide highly capable models that leverage their ability to focus network attention on specific, and generally more important, parts of input data when generating outputs. The application of attention networks to electrical circuit design presents several challenges that are addressed in the present disclosure. These challenges include processing input data representing an electrical circuit to produce data that can be processed using an attention network, and which does not sacrifice important information used when determining routing for an electrical circuit.

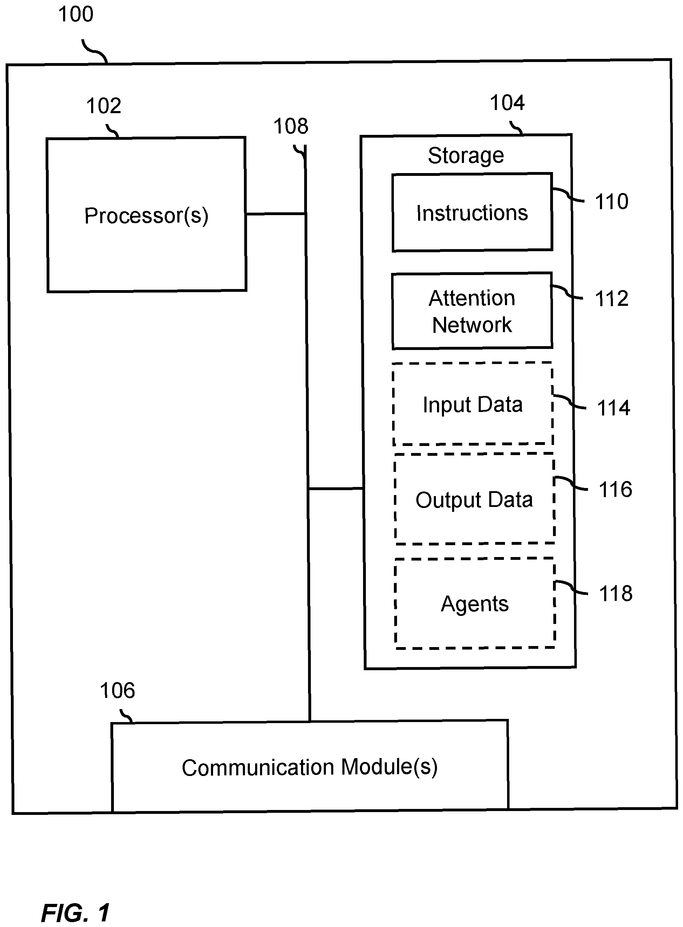

Figure 1 shows an example of a system 100 for generating output data for manufacturing an electrical circuit. The system 100 includes at least one processor 102 and storage 104. The processor 102 and storage 104 are connected over a communication channel, such as a bus 108, allowing them to communicate with each other. The system 100 may also include one or more communications modules 106, to enable the system 100 to communicate with one or more computing devices or further systems. In the example shown, the system 100 may be implemented in a single computing device such as a server. In other examples, the system 100 may be implemented as a collection of computing devices either located in a single facility or geographically distributed across a number of locations and connected over a network such as the Internet.

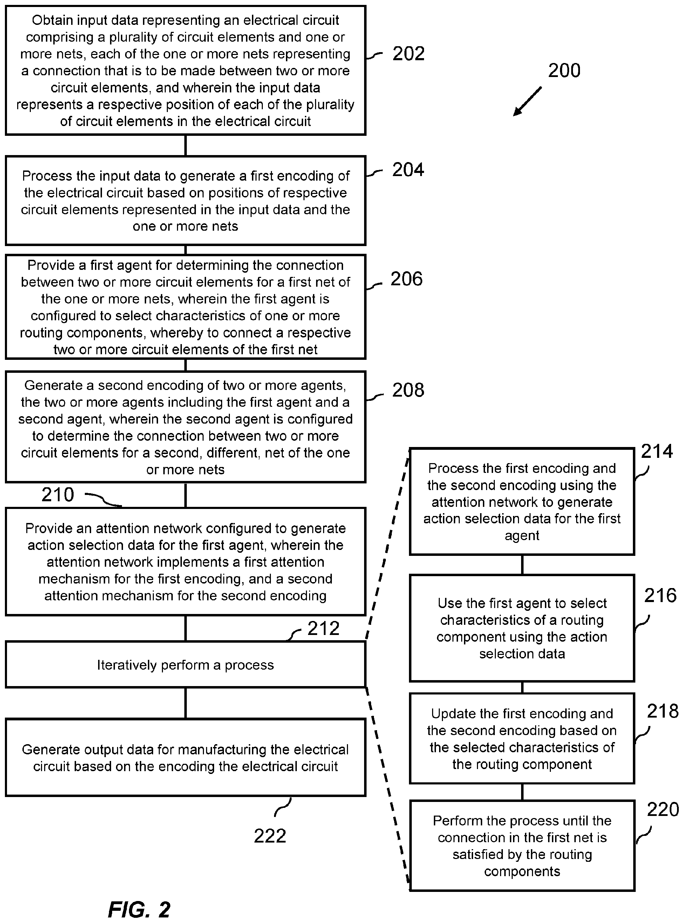

The storage 104 is suitable for storing a set of computer-executable instructions 110, or program code, for executing a method 200, shown in the flow chart of Figure 2. The storage 104 may also be suitable for storing other types of data such as computer-executable instructions 112, or program code, for implementing an attention network, input data 114 representing an electrical circuit, output data 116 for manufacturing an electrical circuit, instructions 118 for implementing one or more agents, and so forth.

The storage 104 may include any combination of volatile and non-volatile storage, for example, a combination of read-only memory (ROM) and one or more types of random-access memory (RAM), such as dynamic RAM, synchronous RAM, and so forth. ROM may be included in the form of both disc-based (e.g., hard drive) or flash memory (e.g., solid-state drive(s)).

The processor(s) 102 may include any suitable combination of processing circuitry configured to execute the instructions 110. The processor(s) 102 may include one or more general purpose processors, such as central processing units (CPU), one or more graphics processing units (GPUs), and/or application specific processing circuitry or processing units. The system 100 may include any suitable combination of processors, or processor types. In some examples, the system 100 includes one or more CPUs and one or more GPUs, wherein the one or more GPUs are used to implement the attention network, and the one or more CPUs may be used to control the overall operation of the system 100.

The one or more communications modules 106 are configured to enable communication with one or more further computing devices, for example, user devices connected via a network. To this end, the communications module(s) 106 may comprise wireless and/or wired communications modules to enable at least one of wired LAN and wireless LAN connectivity. These communications modules 106 may implement known protocols and standards such as Wi-Fi, Bluetooth, Ethernet, and so forth. The system 100 may be capable of communicating over both local and wide area networks via the communications module(s) 106.

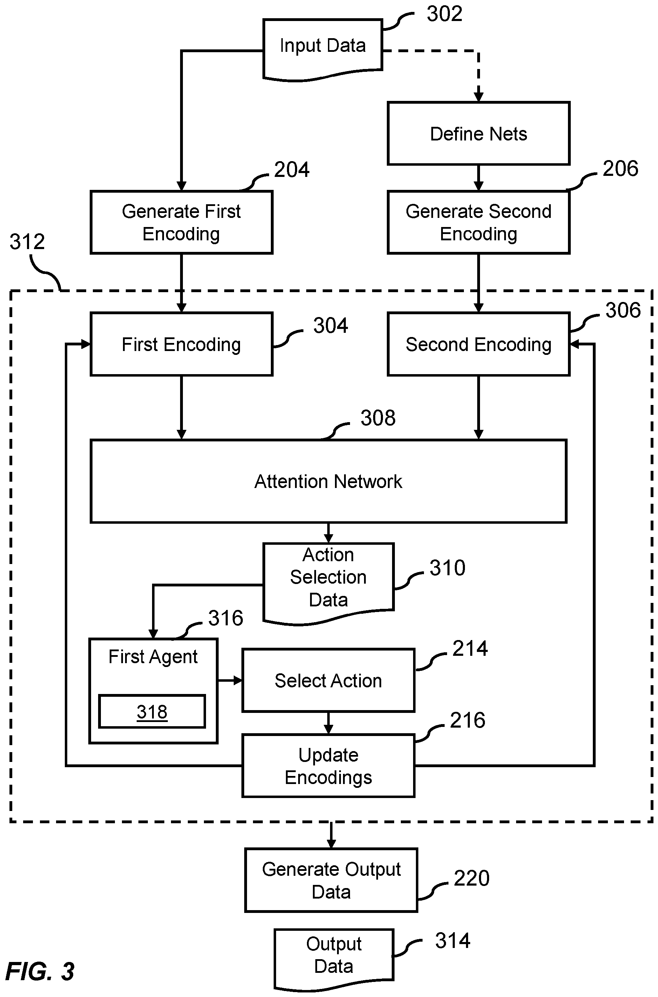

The method 200 will now be described with respect to Figures 2 and 3, wherein Figure 2 is a flow diagram showing the method 200, and Figure 3 is a schematic illustration of the method 200. The present example is concerned with the design of a PCB. However, it will be appreciated that the methods and systems described herein will be equally applicable to the design of other electrical circuits. For example, the design and manufacture of FPGAs, CPUs, GPU, ASICs may include similar processes of determining routing between certain circuit elements. In the case of ASICs, the circuit elements may include various electronic componentry that are to be connected in a specific arrangement according to an electrical circuit diagram. Similarly, the placement and positioning of electrical conducting material to connect components in FPGAs, CPUs, and GPUs, may also involve complex routing operations.

The method 200 involves obtaining 202 input data 302 representing an electrical circuit comprising a plurality of circuit elements. The input data 302 may be obtained from the storage 104 or may be received using one or more communication modules 106. For example, the input data 302 may be sent to the system 100 over a network such as the internet, or via one or more communications modules 106 that enable the system 100 to communicate with local computing devices.

The input data 302 represents a respective position of each of the plurality of circuit elements in the electrical circuit. The input data 302 may comprise coordinates representing the positions of the plurality of circuit elements in the electrical circuit. These coordinates may be defined with respect to the electrical circuit, such that the coordinates associated with a given circuit element define the absolute position of that circuit element in the electrical circuit. For example, where the electrical circuit is a PCB, the coordinates may indicate a specific position in the board according to a width and length of the PCB.

The plurality of circuit elements may include any topological features of the electrical circuit, including components which are to be placed on the electrical circuit and features such as holes or other obstacles. The circuit elements may include both electrical components, which are to be connected, and any other components or features which will affect the topology and routing of the connections in the electrical circuit, for example, isolation regions. A circuit element may include more than one electrical component, for example, a circuit element may represent a group of interconnected components.

The input data 302 also includes one or more nets. The term "net" refers to a single electrical connection, or a group of electrical connections, to be made between two or more circuit elements. A net typically defines which pins of different components, such as chips, resistors, or capacitors, are to be connected together. A net may be defined with a unique name or identifier to distinguish it from other nets in the electrical circuit. The input data 302 may be provided in the form of a .dsn file, which is a file extension used for schematic files created by computer aided design software typically associated with electrical circuit design.

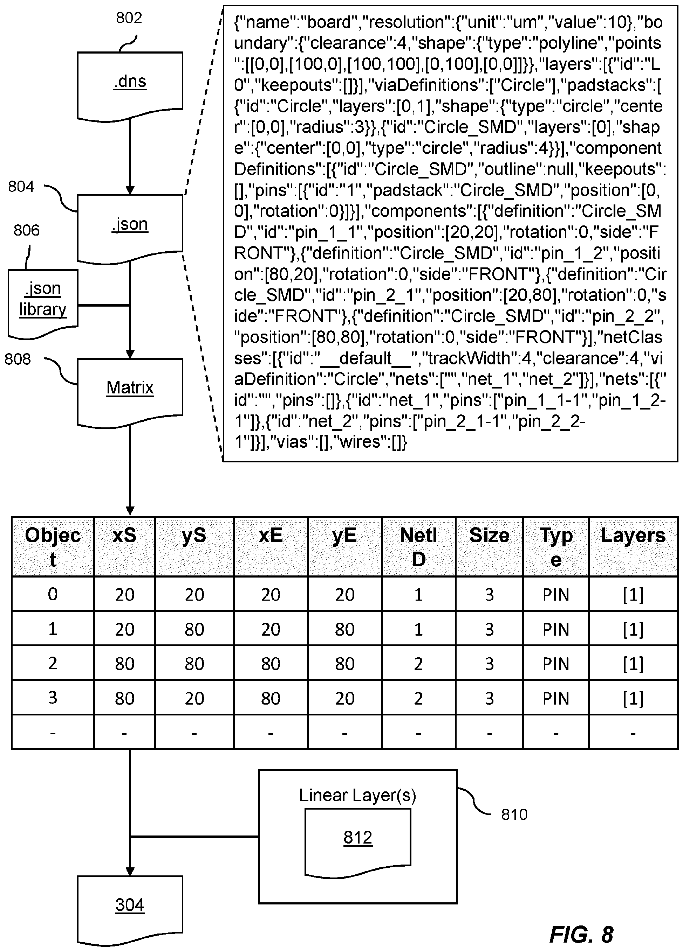

The input data 302 is then processed 204 to generate a first encoding 304 of the electrical circuit. This first encoding 304 is based on the positions of respective circuit elements represented in the input data 302 and the one or more nets. An example process for generating a first encoding 304 that represents the electrical circuit will be described further below with respect to Figures 8 to 11. In some examples, the positions of the respective circuit elements on which the first encoding 304 is based may be represented by coordinates associated with the respective circuit elements.

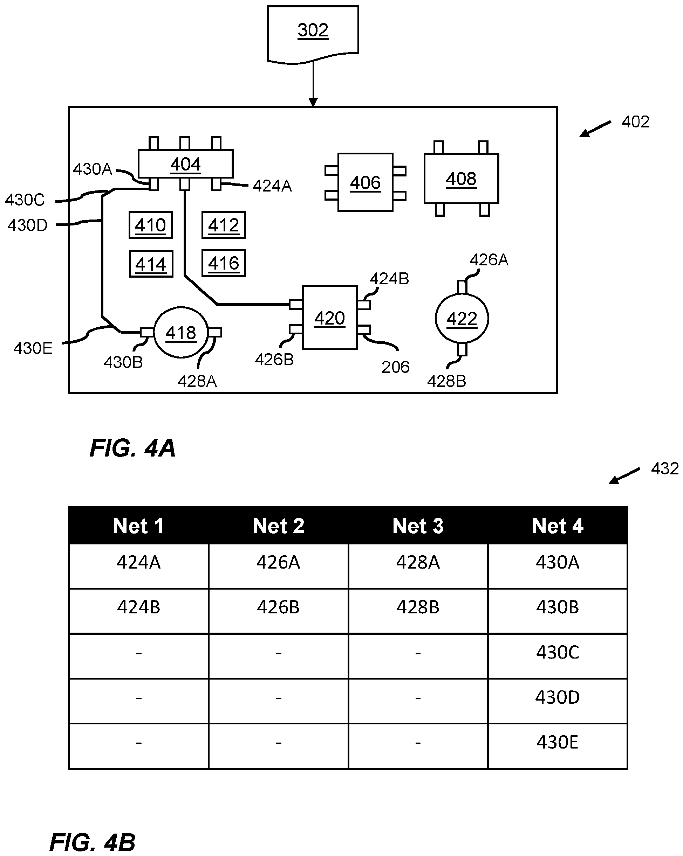

Turning briefly to Figures 4A and 4B, an example of an electrical circuit 402 is shown along with a table 432 which specifies which circuit elements are included in four example nets. The electrical circuit 402 includes a plurality of circuit elements 404 to 430E. In the example shown, each of the pins for a given component, such as a microchip, resistor, capacitor, memory unit, and so forth, may be treated as a separate circuit element. In the table 432, the circuit elements that are included in each net are listed according to their reference numeral.

The circuit elements 424A and 424B in Net 1 are to be connected, the circuit elements 426A and 426B in Net 2 are to be connected, circuit elements 428A and 428B in Net 3 are to be connected, and circuit elements 430A to 430B in Net 4 represent circuit elements that are already connected. Net 4, for example, includes both the pins which are to be connected and the traces connecting those pins. Not all nets in the example electrical circuit 402 are listed in the table 432 of Figure 4B for clarity.

In the example of the electrical circuit 402 shown in Fig 4A, the electrical circuit 402 includes some predetermined connections 430C to 430E between pins. However, it will be appreciated that in other cases, no predetermined connections may be made in the electrical circuit 402 represented by the input data 302.

Returning to Figures 2 and 3, the method 200 involves providing 206 a first agent 316, that is configured to determine the connection between two or more circuit elements of a first net of the one or more nets. For example, the first agent 316 may be configured to determine the connection between circuit elements 424A and 424B of Net 1 is shown in Figure 4. To determine the connection between two or more circuit elements in the first net, the first agent 316 is configured to select characteristics of one or more routing components. A routing component is a component that is selected for the purpose of connecting two or more circuit elements 404 to 430E. Where the electrical circuit is a PCB, the routing component may be any of a trace, part of a trace, or a via. In other examples, the routing component may be wire or other suitable component that is adapted to be used to connect circuit elements in an electrical circuit.

Agents are software, or program entities that perform tasks or operations on behalf of another program. Agents may generally be configured to process, or perceive, conditions in an environment in which they are operating, and to respond to certain changes or stimuli for that environment. Agents are generally sophisticated programs that can implement a complex policy without intervention, rather than more basic programmes that execute predetermined steps according to instructions defined by a programmer. For example, an agent may generally be implemented according to a given policy and may process inputs and take actions according to their defined policy in response to these inputs. **In** some examples, an agent may include, or leverage, a neural network defined by a plurality of weight values arranged in layers. The weight values of the neural network may define a policy for the agent. By updating or modifying weight values in the neural network, it becomes possible for the policy of the agent to adapt and/or improve over time with respect to achieving a specific goal defined by one or more criteria.

The number of routing components, such as wires or traces, that are needed to connect two circuit elements of a given net will be dependent on the configuration of the electrical circuit 402, position of the circuit elements 404 to 430E in the electrical circuit 402, and other relevant topological considerations such as the number of layers, and so forth.

The method 200 involves generating 208 a second encoding 306 of two or more agents, the two or more agents including at least the first agent 316 and a second agent (not shown). The second agent is configured to determine the connection between two or more circuit elements for a second, different, net of the one or more nets, for example Net 2, shown in Figure 4B.

The second encoding 306 may represent the agents which are to be used to determine the routing in the electrical circuit 402. For each of the nets defined in the input data 302 a separate agent may be implemented. To this end, the second encoding 306 may represent, for each agent, a respective position. The position of the agents with respect to the electrical circuit 402 may change as routing components are selected.

For example, an agent may have an initial position at a circuit element 426A in the electrical circuit 402. The agent's initial position is used as a starting position for the routing component which is to be selected by the agent. The agent may then select the characteristics of the routing component, for example a trace having a specified length and angle. The updated position of the agent may then be determined by shifting the position of the agent according to the selected length and angle of the trace.

The first encoding 304 and the second encoding 306 are configured in a format which enables them to be processed by the attention network 308. For example, the information to be represented in the first encoding 304 and the second encoding 306 may be processed to generate lower dimensionality data that is still able to represent the associated information. In some cases, the first encoding 304 and second encoding 306 may include vector representations of information derived from the input data 302. These vectors may be generated based on the input data 302, and may then be processed by the attention network 308.

The method 200 involves providing 210 an attention network 308 configured to generate action selection data 310 for the first agent 316. An attention network 308 is a type of computational model that incorporates an attention mechanism to enhance its processing capabilities. The attention network 308 implements a first attention mechanism for the first encoding 304 and a second attention mechanism for the second encoding 306. Implementing a first attention mechanism and a second attention mechanism in this way causes the attention network 308,when generating action selection data 310 for the first agent 316, to focus attention on the layout of the electrical circuit 402 as represented by the first encoding 302, and to focus attention on the relative position of the other agents in the electrical circuit, as represented by the second encoding 306.

The first attention mechanism may be implemented according to any suitable attention mechanism. For example, the first attention mechanism may implement self, or cross, attention when processing the first encoding 304 to account for the layout of the electrical circuit. Self-attention in this context may involve processing the first encoding 306 according to a multi-headed attention operation to generate encoded vectors. Alternatively, a cross attention mechanism in this context may refer to the use of the first encoding 304 as an input to a key module and, in some cases, a value module in a cross-attention mechanism, and the use of a further encoding, such as the second encoding 306, as an input to a query module in the cross-attention mechanism.

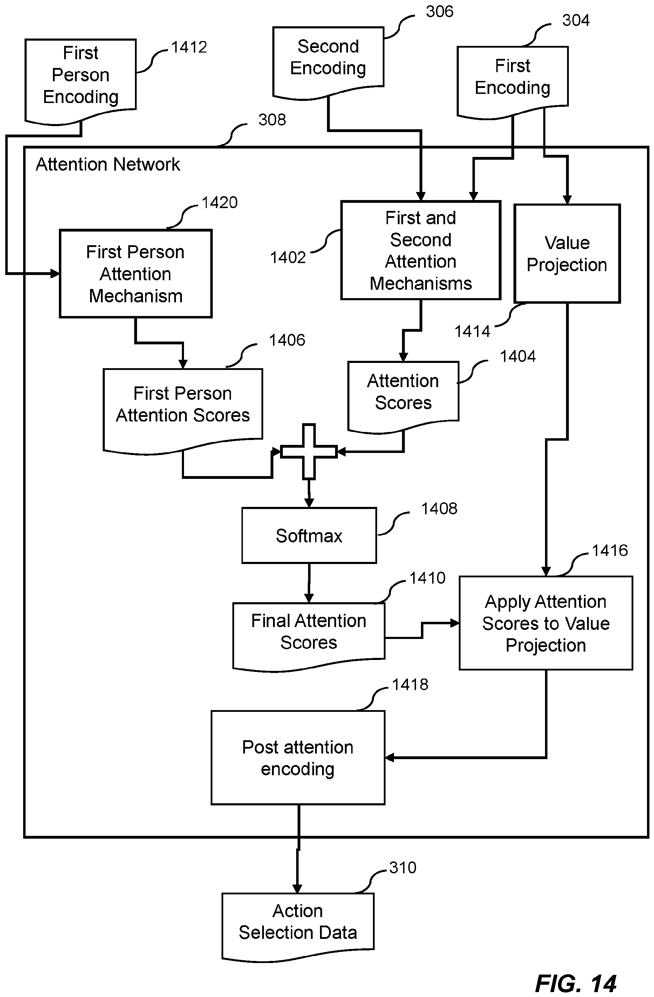

The second attention mechanism may similarly be implemented according to any suitable attention mechanism, such as self, or cross, attention when processing the second encoding 306 to account for the relative position of the agents in the electrical circuit 402. For example, the second encoding 306 may be provided as a key and query input in a self-attention operation. Alternatively, the second encoding 306 may be used as a key, and potentially a value, input in a cross-attention mechanism, wherein a further encoding, such as the first encoding 304 is used as a query input. A specific example of the attention mechanisms will be described further below with respect to Figures 14 to 16.

It is noted that an attention mechanism that is for a particular one of the first 304 or second 306 encodings, may still use the other one of the first 304 or second 306 encodings as an input. It will be appreciated that an attention mechanism that is for a particular one of the first 304 or second encoding 306 may indicate that the attention mechanism is configured to enable the attention network to focus attention on the respective encoding, or particular aspects thereof.

By implementing two separate attention mechanisms, one for the first encoding 304 and one for the second encoding 306, it is possible for the attention network 308 to account for both the layout of the electrical circuit, and the relative position of all agents in the electrical circuit 402, when determining action selection data 310.

It has been found that solutions generated where a single attention mechanism is used, for example, a cross-attention mechanism for agent-to-electrical circuit attention, in which, when determining actions for an agent the attention mechanism places attention on the layout of the electrical circuit 402, can suffer from extended paths for some of the nets and significantly shorter paths for other nets. This may lead to highly varying characteristics of different nets, which may be undesirable.

While optimisation, or retraining attempts, may be performed to increase the performance of single attention mechanism implementations, these approaches are undesirable due to their associated costs and inefficiency. It has been found that by configuring an attention network 308 that is able to account for both the position of electrical circuit elements, as well as the position of other agents in the electrical circuit, when generating action selection data 310, solutions can be achieved that perform better according to relevant criteria when averaged across all nets.

As discussed briefly above, agents are used to sequentially select routing components to be added to the electrical circuit 402 to satisfy the connections specified in their respective nets. As routing components are sequentially selected by an agent, the freedom of movement for other agents in the electrical circuit 402 may be restricted. This is because routing components, such as traces, in two separate nets should not interfere or overlap in the same layer.

By implementing agent-to-agent attention, according to the second attention mechanism, it is possible to account for the operation of multiple agents simultaneously. Typically, where the agents act independently to connect their respective nets, if the agents are acting simultaneously, there is a risk that two, or more, agents will simultaneously make a selection which conflicts, or which is more likely to conflict in the future. For example, when evaluating the layout of the electrical circuit, a potential path in one direction may appear clear for a given agent. However, if another agent simultaneously makes a decision based on this same information, then both agents may select routing components that extend in this direction. This direction may no longer be optimal as the two agents will now have to divert their paths to avoid the other agent.

By using an attention mechanism that additionally focusses on the second encoding 306, the selection of characteristics for a routing component may be sensitive to the current layout of the electrical circuit 402 and also the likely decisions which may be made by other agents in the electrical circuit 402. As such, it is possible to mitigate, or avoid, potential conflicts between agents acting for different nets.

Generally, it is desirable in electrical circuits to minimise the total length of routing, minimise the number of vias, minimise the number of changes in direction for routing paths, and minimise the angle at which electrical routing changes direction. These features are typically found to be more expensive to manufacture, are more likely to introduce manufacturing errors, and have a higher risk of introducing undesirable electrical interference in electrical circuits. By accounting for the position of other agents when determining routing for the electrical circuit, and avoiding potential conflict between agents earlier, it is possible to reduce the number of vias, the length of routing, and/or the number of changes in direction for the routing in the electrical circuit.

The method 200 involves iteratively performing 212 a process 312 to select characteristics of routing components for a given net. The process 312 includes processing 214 the first encoding 304 and the second encoding 306 using the attention network 308 to generate action selection data 310 for the first agent 316. The first agent 316 is then used to select 216 characteristics of a routing component, based on the action selection data 310, for connecting two or more circuit elements in the respective net.

It will be appreciated that while a single routing component, such as a wire, may not be sufficient to connect two circuit elements 424A and 424B in a given net, the wire may form part of a path between the two circuit elements. In some cases, a single routing component may be used to connect two circuit elements in a net. In other examples a plurality of routing components, such as wires and vias are used to connect two electrical circuit elements in a given net.

Where the routing components for the respective net are wires, used to connect two or more pins, the characteristics of these routing components may include, for example, the length, angle, position, width, and other relevant characteristics of the routing component. Where the routing component is a via, the characteristics may specify an angle, for example, perpendicular to the PCB, a length, and/or a size. Rather than define different characteristics for certain routing components, it may be possible to represent certain routing components using specific values of the characteristics. For example, when the characteristics selected by the first agent 316 specify that a via should be used, then the selected characteristics may indicate no length, an angle perpendicular to the PCB, and the routing component being positioned across multiple layers.

The first encoding 304 and the second encoding 306 are then updated 218 based on the selected characteristics of the routing component. Updating the first encoding 304 may involve modifying the first encoding 304 such that it additionally includes a representation of the routing component for which the first agent 316 selected the respective characteristics. Updating the second encoding 306 may involve modifying the second encoding 306 to represent an updated position of at least the first agent 316, and potentially further agents, in the electrical circuit 402. The encodings 304 and 306, when updated, may represent information that is derived from the selected characteristics of the routing components. In that case, updating the first encoding 304 and the second encoding 306 may involve determining one or more further characteristics based on the selected characteristics, and modifying at least one of the first encoding 304 and the second encoding 306 based on the one or more further characteristics.

The process 312 is performed 220 until the connection in the first net is satisfied by the routing components, for which characteristics have been selected by the first agent. In other words, the process 312 may be repeated until the routing components, for which the first agent 316 has selected the respective characteristics, form a path in the electrical circuit 402 that satisfies the connection between two or more circuit elements in the respective net associated with the first agent 316.

Output data 314 for manufacturing the electrical circuit 402 based on the first encoding 304 of the electrical circuit 402 is then generated 222 based on at least part of the first encoding 304 of the electrical circuit 402. This output data 314 may, for example, specify the positions and characteristics of the routing components that have been added to the first encoding 306 when performing the process 312. The output data 314 may be produced in a format that is configured to be used for manufacturing. For example, the output data 314 may be a .dsn file that specifies the traces, vias, and other routing components for the electrical circuit 402. In some cases, the output data 314 may include instructions for manufacturing an electrical circuit 402 according to the first encoding 304. This may involve instructions for a manufacturing machine that is configured to populate an electrical circuit 402, such as by depositing, soldering, and/or laying embedded wiring in a circuit board.

By implementing a first attention mechanism for the layout of the electrical circuit, and a second attention mechanism for agents in the electrical circuit, it is possible to quickly, and accurately, design and manufacture complex electrical circuits. Fast design, development, and manufacture of electrical circuits enables fast prototyping, research and development, and production of electrical circuits and other electronics. While the first attention mechanism may be used to focus network attention on prior actions of multiple agents, because the routing components that the agents have selected are represented in the first encoding 304, it is not able to account for a current position of the agents in the electrical circuit 402. The current position of an agent in the electrical circuit 402 influences the characteristics of the routing component which that agent is likely to select in a next iteration of the process 312. By focusing attention on the position of multiple agents it is possible for the attention network 308 to generate action selection data 310 that the first agent 316 may use to select a routing component that is less likely to conflict or interfere with routing components that are yet to be selected by the other agents in the electrical circuit 402.

In the example shown in Figure 3, the second encoding 306 is generated by first defining, or determining, the nets from the input data 302. This may involve, for example, identifying the nets specified in the input data 302, and selecting an initial position of an agent for each net. The initial position of an agent for a given net may typically be collocated with the coordinates of one of the circuit elements to be connected. In other examples, the position may be randomly initialised, or initialised at a predetermined position, or according to a predetermined rule. For example, the initial position of an agent for a given net may be between two or more circuit elements in the given net which are to be connected. The position of the different agents may then be represented in a matrix, for example using coordinates, along with an indication of a respective net to which each agent is associated. The second encoding 306 may then be generated by processing such a matrix to generate an embedding representing the agents.

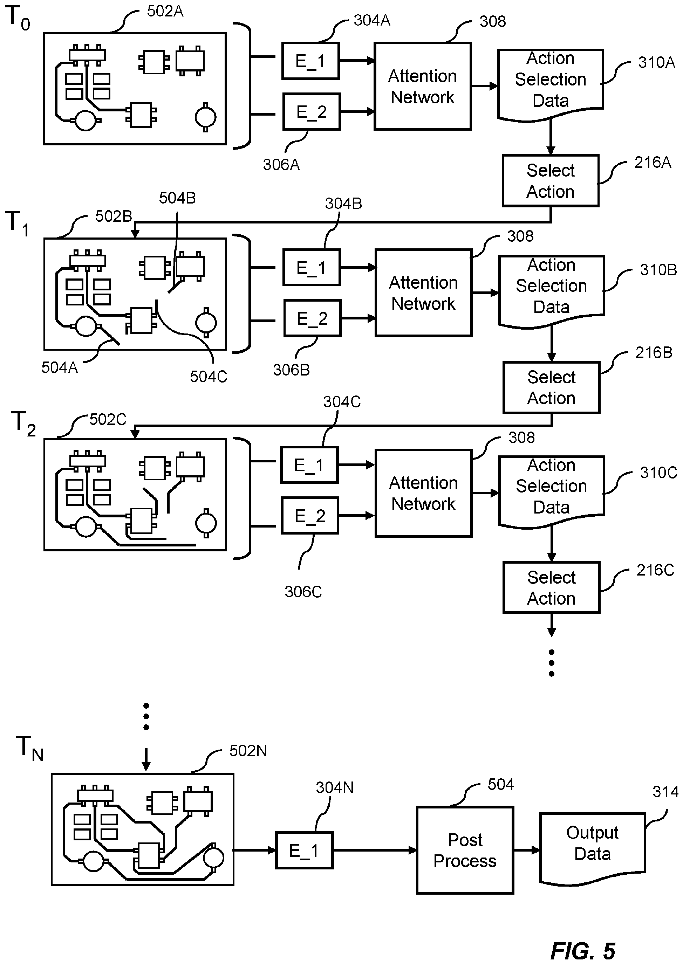

Figure 5 shows an example in which multiple iterations of the process 312 are performed to generate the output data 314. In Figure 5, a different subscript is added to reference numerals associated with different iterations. An example of the electrical circuit 502A at a first instance T₀ is shown, which includes the circuit elements 404 to 430E and nets as previously shown in Figure 4. The first encoding at time T₀ 304A and second encoding at time T₀ 306A are generated and processed using the attention network 308 to generate action selection data 310A. The action selection data 310A is used to select 218A an action for an agent. In the example shown, the action selection data 310 includes action selection data for a plurality of agents and each of these agents selects a respective action for their net. The actions selected by each agent in this context include the selection of characteristics of a routing component for their respective nets. The agents will make their respective selections simultaneously. The resulting configuration of the electrical circuit 502B, at a second time T₁, is shown and now includes additional routing components for the nets. As can be seen in Figure 5, the electrical circuit 502B includes additional wires 504A to 504C, compared to the electrical circuit 502A at time T₀, each wire having a respective length and angle, where the angle may be defined in any suitable reference frame.

The first encoding 304B and the second encoding 306B are updated and the process 312 is repeated to generate further action selection data 310B and to select subsequent actions 218B for the agents. At time T₂, the representation 502C of the configuration of the electrical circuit 502C now shows further routing components have been added to the electrical circuit 502C. The process 312 is repeated until the nets have been connected, as shown in the representation of the electrical circuit 503N at time T_{N}. The first encoding 304N, after being updated, may then be post processed 504 to generate the output data 314.

In the example shown in Figure 5, at each iteration actions are selected for a plurality of agents. Specifically, all of the outstanding nets, defined in the input data 302, and which are yet to be connected, have an associated agent for which an action is selected at each stage. In some examples, the action selection data 310, generated by the attention network 308, may be suitable for selecting actions for a plurality of agents. This may involve generating a respective portion of action selection data 310 for each agent for which an action is to be selected. The plurality of agents may then select respective actions based on their respective portions of the action selection data 310. It will be appreciated, however, that the attention network 308 may generate action selection data 310 for a single agent, such as the first agent 316.

As stated above, the attention network 308 may generate action selection data 310 for a single agent. In this case, the decisions made by agents for other nets may be determined according to an alternative process, policy, or model. For example, a different attention network (not shown) may be used for each agent, wherein the first encoding 304 and the second encoding 306 would be shared across the different attention networks.

Alternatively, one or more of the agents may be controlled according to a predetermined action selection policy in which an adaptive model, such as an attention network 308, is not used, but instead a deterministic instruction is provided. In other cases, certain agents may not select an action for every iteration of the process, but their respective position in the electrical circuit 402 is still defined and used in the second encoding 306. Where one or more further agents do not use action selection data 310 generated by the attention network 308, the first encoding 304 and the second encoding 306 may be updated based on the behaviour of those two or more agents as well. Even though not all agents may be guided by the attention network 308 as described, it will be appreciated that maintaining an up-to-date representation of the electrical circuit 402, and locations of all agents, enables the attention network 308 to be used to efficiently determine electrical routing that in a manner that effectively accounts for the routing of a plurality of nets simultaneously for the electrical circuit 402.

Where the attention network 308 generates action selection data 310 for only the first agent 316, the output data 314 may include a representation, or instruction, for manufacturing the connections specified in the net associated with the first agent 316. In this example, multiple portions of output data 314, each being associated with a respective net, may be collated and/or combined to manufacture the electrical circuit 402.

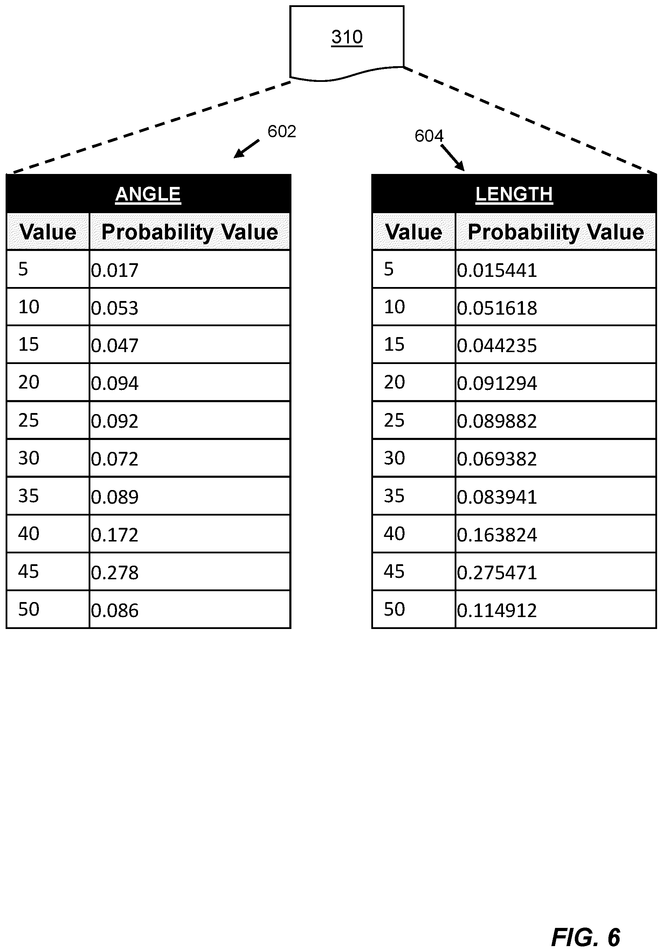

Figure 6 shows an example of action selection data 310 generated by the attention network 308. In the example shown, the action selection data 310 comprises output probability values for two characteristics of a routing component, angle 602 and length 604, which are to be selected. The first agent 316 may then use these output probability values to select characteristics for the routing component.

In this example, the action selection data 310 includes a probability distribution over a plurality of values for each characteristic, such as the potential angle 602 and the potential length 604 of the routing component. The probability distribution for the angle 602 is expressed as a plurality of candidate angles, between 5 and 50 degrees, each being associated with a respective probability value. Similarly, the probability distribution for the length 604 is expressed as a number of candidate lengths associated with respective probability distributions. The precision and range of candidate values for any given characteristic of a routing component may be dependent on the specific implementation. For example, the units, precision, and range, of units for the characteristics may depend on certain manufacturing constraints for a given electrical circuit, the size of the electrical circuit, and so forth.

The output probability values, may be correlated with an expected award that would be achieved if the respective value of a characteristic for a routing component is selected. For example, a higher probability value may be correlated with a higher expected reward than a lower probability value. An expected reward in this context relates to the performance of the electrical circuit according to one or more criteria.

In the examples shown in Figures 4A to 5, the electrical circuit 402 is configured on a single layer, and the routing components to be added to each net are generally traces of uniform size, or gauge. However, it will be appreciated that in other implementations the characteristics for a routing component may also include size, or "gauge" where the routing component is a trace or wire, an indication of a layer for the routing component, and a type of routing component. It will also be appreciated that while a separate probability distribution is shown for each characteristic in Figure 6, that a probability distribution may be provided over combined characteristics, such as over different combinations of values for length 604 and angle 602.

The angle for a routing component may represent an angle that the routing component makes relative to a predetermined direction on the electrical circuit 402. For example, the angle may be a bearing according to a fixed direction on the electrical circuit. Alternatively, the angle may represent a difference in angle between a prior routing component for which the characteristics have already been selected, and the current routing component for which characteristics are to be selected by the first agent 316

When selecting one or more characteristics of the routing component using the action selection data 310, the agent 316 may be configured to select a value for the respective characteristic based on a respective agent policy. The agent policy may be represented by a set of policy variables, such as weight values 318 for a neural network implemented in the agent. In some cases, this agent policy may cause the agent 316 to select the most probable value for each characteristic which is to be selected. In other cases, the agent policy may be configured to prioritise the selection of characteristic values according to other properties of the probability distribution.

The agent 316 may process the probability values, or probability distribution, using any suitable form of statistical analysis, such as range, mean, median, linear regression, softmax function, and so forth. While the probability values for a given characteristic may be correlated with an expected reward that may be achieved based on a selection of that value, the agent 316 may be configured with a policy that is adapted to maximise expected or actual rewards over a plurality of nets rather than for the given net associated with the agent 316. This may involve selecting a value that provides less reward in the short term for the agent 316, but which maximises the average reward achieved across all agents. As such the agent 316 may be configured to select values associated with the second, or third, highest probability value and so forth.

The attention network 308 may also be configured to generate a predicted reward value for the electrical circuit. The process 312, which is performed iteratively, may comprise generating a predicted reward value for the electrical circuit, and storing the predicted reward value in association with a current state of the first encoding 304 of the electrical circuit, in storage 104.

The predicted reward value may be associated with the characteristics of the electrical circuit measured against one or more desired characteristics of the electrical circuit. These desired characteristics of the electrical circuit may include any one or more of, a total length of routing included in the electrical circuit, a total number of vias in the electrical circuit, a number of changes in direction of routing in the electrical circuit, an indication of layer utilization, a measure of electrical isolation between nets in the electrical circuit, a number of different angles associated with wires for a given net, an area of one or more planes in the electrical circuit, a number of plane islands in the electrical circuit, and other relevant characteristics of an electrical circuit which affect manufacturability, durability, potential interference, and so forth.

As discussed above, there may be a plurality of agents for which the attention network 308 is providing action selection data 310. Depending on the performance of the attention network 308, in some cases not all nets may be successfully connected at the conclusion of the process 312. In this case, the predicted reward value may also be indicative of a performance of the electrical circuit with respect to an expected proportion of connections in the electrical circuit that will be completed. For example, where a current configuration of the electrical circuit 402, represented by the first encoding 304, is unlikely to result in all of the specified connections in the input data 302 being satisfied, then a lower expected reward may be generated compared to configurations of the electrical circuit 402 which are likely to result in all of the connections specified in the input data 302 being satisfied at the end of the process 312.

The attention network 308 may implement a value function configured to process the first encoding 304 to generate the predicted reward value. The value function implemented by the attention network 308 may be defined according to one or more functions. In some cases, the value function is represented according to a set of one or more variables, such as weight values, that may be used to process the first encoding 304 to generate the predicted reward value. For example, the value function may be implemented using a neural network. In this case, the value function may be trained, or tuned, by updating the respective weight values based on prior implementations of the method 200 and/or based on test data.

In some examples, the process 312 may involve updating the attention network 308 based on the stored predicted reward value. This may involve, at each iteration of the process 312, updating weight values defining the attention network 308 based on the predicted reward value. In this way, it is possible to tune the attention network 308 to generate action selection data 310 in subsequent iterations of the process that is more likely to lead to the electrical circuit performing more favourably against the one or more desired characteristics. By tuning, or updating, the attention network 308 as part of the iterative process 312 it becomes possible to increase the performance of the attention network 308 in concurrence with determining the routing.

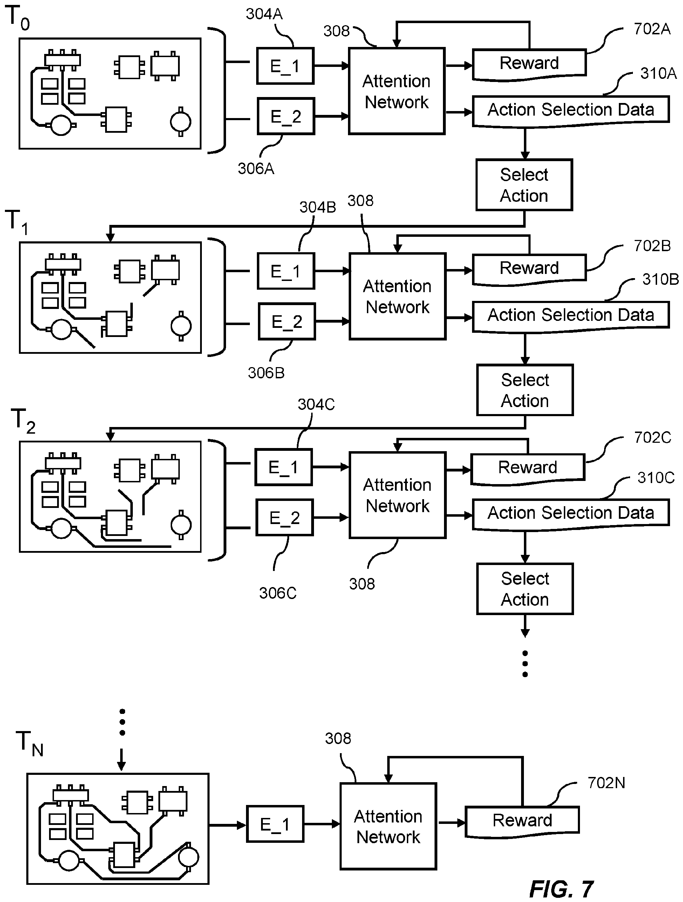

Figure 7 shows an example of the method 200 in which the attention network 308 is configured to generate a predicted reward value 702A to 702N at each iteration of the process 312. These reward values 702A to 702N may be used to update or modify the attention network 308 after each iteration. For example, where the predicted reward value 702A for the electrical circuit shows a decrease in expected reward, the attention network 308 may be modified or trained such that the action selection data 310B to 310N generated in subsequent iterations of the process 312 improves the performance with respect to the predicted reward value 702B.

Updating the network 308 may be based on the predicted reward value 702A to 702N and, in some cases, an actual reward obtained by the electrical circuit 402 at the respective configuration represented in the first encoding 304. In some cases, the predicted reward value 702A to 702N may decrease between stages, or iterations, but the actual reward may increase, thereby the total reward may be consistent and so the updates to the attention network 308 may be minimal, or not performed at all. By updating the attention network 308 at each stage, or iteration, of the process 312, it becomes possible to increase the performance of the attention network 308 and mitigate the likelihood that the network 308 will focus on solutions which perform poorly across one or more of the desired characteristics of the resulting electrical circuit 402.

The predicted reward value 702A to 702N generated by the attention network 308 may be representative of a predicted performance of the electrical circuit 402 with respect to the one or more desired characteristics based on a current state of the first encoding 306 of the electrical circuit 402. For example, the reward 702A generated at the first iteration T₀, shown in Figure 7, may be based on the first encoding 304A. In subsequent iterations, such as at T₁, the reward value 702B that is generated may be based on the updated first encoding 304B at T₁. In other examples, the predicted reward value 702B may be based on the first encoding 304B of the electrical circuit and the action selection data 310B.

The method 200 may also involve generating a reward value representing an actual, or realised, performance of the electrical circuit 402 with respect to one or more desired characteristics, and updating the attention network 308 based on the actual reward value and/or one or more stored predicted reward values 702A to 702N. By updating the attention network 308 based on the actual reward value, it is possible to tune the performance of the attention network 308 based on an actual performance of the attention network 308 in designing an electrical circuit for manufacture. In some examples, generating a finalised actual reward value may be performed when the process 312 is ended. In this case, the attention network 308 may be updated based on this finalised actual reward and/or the one or more stored predicted reward values, after the process is ended. In this way, it becomes possible to tune the attention network 308 for future applications of the method 200.

The attention network 308 may comprise a plurality of weight values, or variables, which can be modified when training or updating the attention network 308. Updating an attention network 308 involves a process similar to that of updating traditional neural networks, but with specific focus on the attention mechanism(s). Updating the attention network 308 may involve calculating a loss based on the actual reward value and/or the one or more predicted reward values 702A to 702N. This loss measures how far the network's 308 output is from the desired result. The nature of the loss function depends on the specific task, but examples include Mean Squared Error for regression tasks, Cross-Entropy Loss for classification tasks, and so forth.

Backpropagation is used to calculate the gradients of the loss function with respect to each parameter in the network, including those in the attention mechanism. This may involve computing the derivative of the loss with respect to weights in the attention mechanism, which indicates how changes in these weights would affect the overall loss. The weights in the attention mechanism may be updated using the gradients calculated during backpropagation. An optimization algorithm, such as Stochastic Gradient Descent (SGD), Adam, or RMSprop, can be used to adjust the weights in a way that minimizes the loss. This typically involves incrementally adjusting the weights in the direction that reduces the loss, based on a predetermined learning rate, which may be defined according to a variable stored in the storage 104. These steps may be performed for the weights in traditional layers of the network 308 but also specifically to adjust the parameters, or weight values, that govern how attention is applied in the attention network 308.

As will be discussed further below, generating the first encoding 304 may comprise processing the input data 302 using a first set of one or more weight values. Generating the second encoding 306 may similarly comprise processing a representation of two or more agents using a second set of one or more weight values. The first and second set of weight values used to generate the first encoding 304 and the second encoding 306 are separate from any weight values that define the attention network 308. The first and second sets of weight values used to generate the first encoding 304 and the second encoding 306 respectively may be updated based on the actual reward value and/or one or more stored predicted reward values 702A to 702N. In this way, the process of generating the first 304 and second encodings 306 may be updated such that in subsequent implementations of the method, the first encoding 304 and the second encoding 306 may provide information that is more useful for the attention network 308 when applying the first and second attention mechanisms to generate the action selection data 310.

In some examples, the method 200 may be repeated a predetermined number of times to generate a plurality of output data 314 for manufacturing the electrical circuit 402. One of the plurality of output data 314 may then be selected based on a respective actual reward value associated with the respective encoding of that electrical circuit 402. Where the attention network 308 is updated based on the actual reward value after each performance of the method 200, the output data 314 generated after each attempt is expected to improve with respect to the desired characteristics of the electrical circuit.

Similarly, where first and/or second sets of weight values are used to generate the first encoding 304 and the second encoding 30 respectively, and these first and second sets of weight values are updated based on the actual reward value after each performance of the method 200, the output data 314 generated after each attempt is expected to improve with respect to the desired characteristics of the electrical circuit. An example of part of a process for generating the first encoding 304 is shown in Figure 8. In this example, generating the first encoding 304 involves processing the input data 302 to generate a matrix representation of the plurality of circuit elements. As discussed above, the input data 302 may include a .dsn file 802 describing the layout of an electrical circuit, including the relative sizes and positions of the circuit elements in the electrical circuit, and an indication of connections to be made between two or more of the circuit elements.

The .dsn file 802 may be processed to generate a .json file 804, also referred to as a "JSON file", representing the configuration of the electrical circuit. A .json file type is a text-based format used to store and transmit data, primarily in the context of web applications and programming. JSON stands for JavaScript Object Notation, and as the name suggests, it was originally derived from JavaScript. However, its simplicity and effectiveness make it a format suitable for many programming environments beyond JavaScript. JSON is designed to be easily readable by humans and straightforwardly parsed and generated by machines. JSON syntax uses name/value pairs (akin to the properties of an object in JavaScript) and ordered lists of values (like arrays).

An example of data included in the JSON file 804 is shown in Figure 8. The example circuit that is described in the example JSON file 804 of Figure 8 is a simplified circuit comprising four circuit elements, arranged in two nets. In the illustrated examples, and in accordance with terminology commonly used in JavaSript Object Notation, the term "object" is used to refer to any circuit elements or routing components which are to be represented in data when determining routing for the electrical circuit. The JSON file 804 may be processed using a JSON library 806 to extract the information represented in the JSON file and to represent it as a matrix 808.

Each circuit element, or "object", in the electrical circuit is represented according to at least part of a row in the matrix representation 808. Each row in the matrix representation 808 includes an indication of coordinates for a respective circuit element and an indication of a net for the respective circuit element. In the example shown in Figure 8, each circuit element, referred to as an object, is associated with a respective starting coordinate (xS, yS), representing a position on the electrical circuit, and a respective end coordinate (xE, yE). The net to which an circuit element belongs is represented according to the NetID field, wherein circuit elements that share a common NetID are in the same net.

The matrix representation 808 also includes an indication of size, type, and layer for each circuit elements. There is currently only one type of circuit element, pins, represented in the matrix representation 808. In this example, all of the circuit elements are on the same layer. A one-hot encoding is used to represent the layer of a circuit element, however, when multiple layers are available, such as two layers, then the layers may be represented in the matrix representation 808 according to two-hot encoding, or three-hot encoding, and so forth. For example, where two layers are available in the electrical circuit, the layer information for a circuit element which is positioned on only one of these layers may be represented as ([1],[0]) or ([0],[1]). A circuit element which crosses multiple layers, such as a via, may be represented using ([1],[1]).

This matrix representation 808 of the electrical circuit may then be processed using one or more linear layers 810 comprising the first set of weight values 812 to generate the first encoding 304 for the electrical circuit. A linear layer, in the context of neural networks and machine learning, is a type of layer that performs a linear transformation on its input data. It's often referred to as a "fully connected layer" or "dense layer." In this layer, each neuron in the layer receives input from all neurons of the previous layer, and its output is computed as a weighted sum of these inputs, often followed by the addition of a bias term. Mathematically, this can be expressed as output = input * weight + bias.

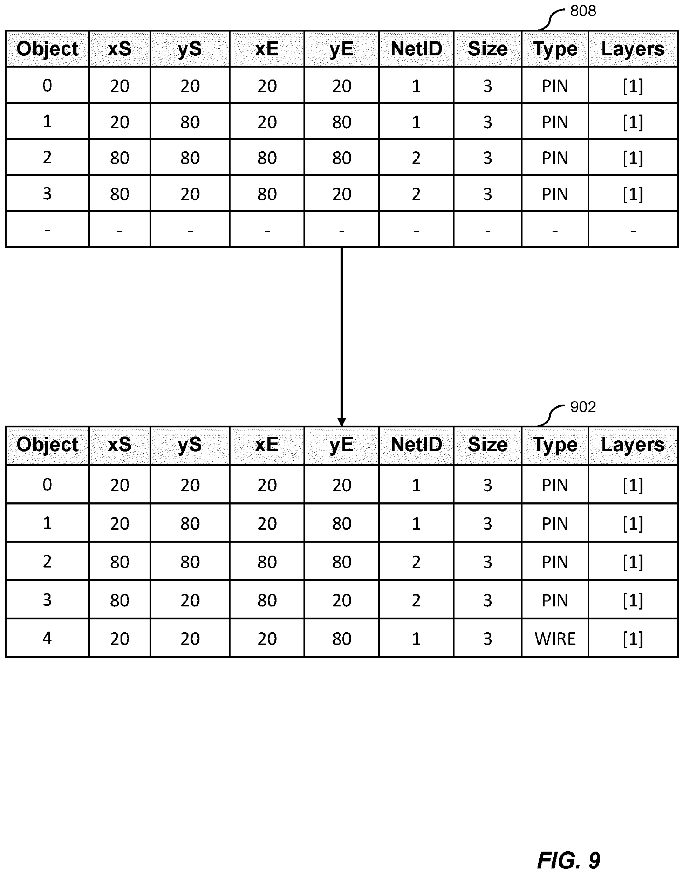

Updating the first encoding 304 based on the characteristics of a routing component selected by the agent 316 during the process 312 may involve updating the matrix representation 808 to include an additional routing component having the characteristics selected by the agent 316. Turning briefly to Figure 9, an example is shown in which an updated matrix representation 902 is generated by modifying the matrix representation 808 based on the characteristics of the routing component selected by the agent 316. The routing component, for which characteristics have been selected by the agent 316 in this example, is a wire. This wire is added as an additional object in the matrix 902 and in this case connects circuit elements, referenced as "objects", "0" and "1" in the net having NetID = 1. Although the characteristics of the wire, such as length and angle, are not actually specified in the updated matrix representation 902, it can be seen that a start coordinate and an end coordinate of the wire are specified in the matrix representation 902. The start and end coordinate of the wire in this matrix representation 902 is derived from the position of the agent 316 prior to making the selection, which in this case would have been at object "0", coordinates (20, 20), and the characteristics selected by the agent 316, which in this case are length and angle.

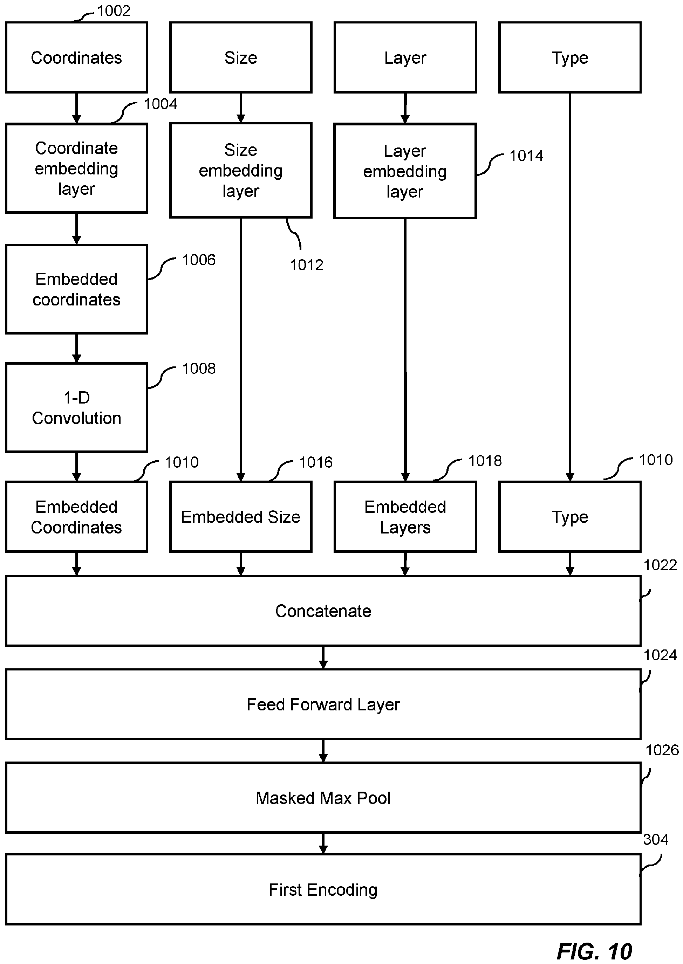

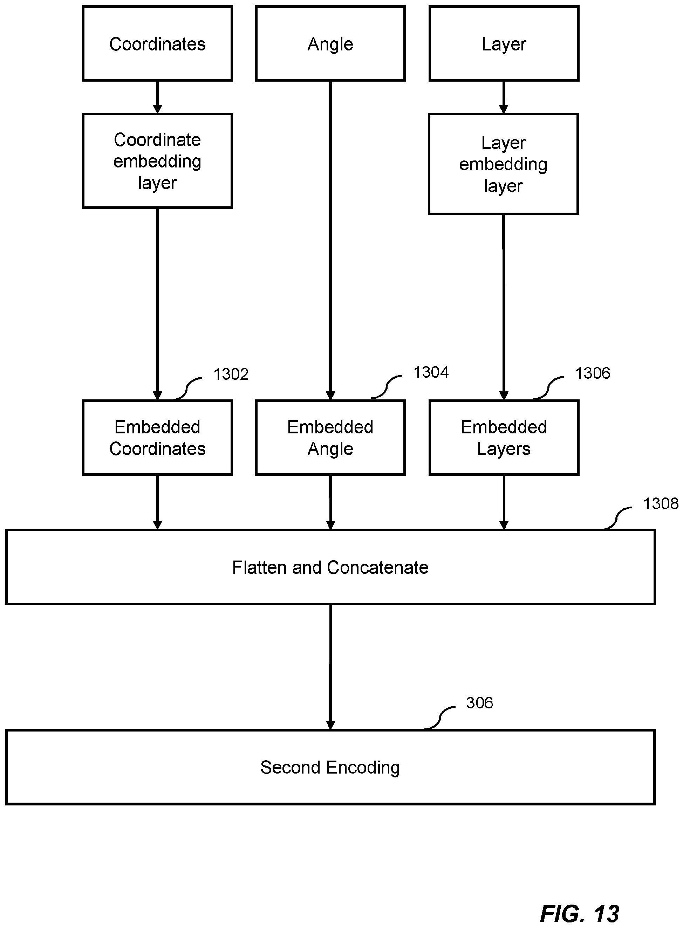

Figure 10 shows additional steps that may be used to generate the first encoding 304. Some data derived during this processing may also be shared with the process for generating the second encoding 306, which will be described further below with respect to Figure 13. In the example shown in Figure 10, the coordinates 1002 of the circuit elements in the electrical circuit 402 are processed in an embedding layer 1004. Embedding generally refers to the process of representing high-dimensional data, like coordinates of circuit elements in an electrical circuit, in a lower-dimensional space in a way that preserves relevant properties of the original data. Embeddings are used to convert complex data types, such as the layout of an electrical circuit, into a form that can be efficiently processed by the attention network 308.

The resulting embedded coordinates 1006 are then processed using a one-dimensional convolution operation 1008 to generate updated embedded coordinates 1010 that comprise a plurality of vectors representing the circuit elements in the matrix 808. Embedding operations 1012 and 1014 are similarly performed for the size and layer characteristics represented in the matrix 808. The embedded coordinates 1008, embedded size 1016, embedded layers 1018, and type 1020 are then concatenated 1022. Concatenating in this context may refer to combining the embedded coordinates 1010, embedded size 1016, embedded layers 1018, and type into a data array, such as a matrix. Due to the convolution operation 1008 applied to the coordinates, this may involve matching the size and/or dimensionality of one or more arrays in which the embedded size 1016, embedded layers 1018, and type are stored, with the embedded coordinates 1010 derived using the convolution operation 1008. Additional processing steps such as using a feed forward layer 1024, and a masked max pool 1026 operation may be performed to generate the finalised first encoding 304.

It will be appreciated that additional processing, not shown, may also be performed on the size and layer information for the circuit elements 404 to 430E derived from the input data 302.

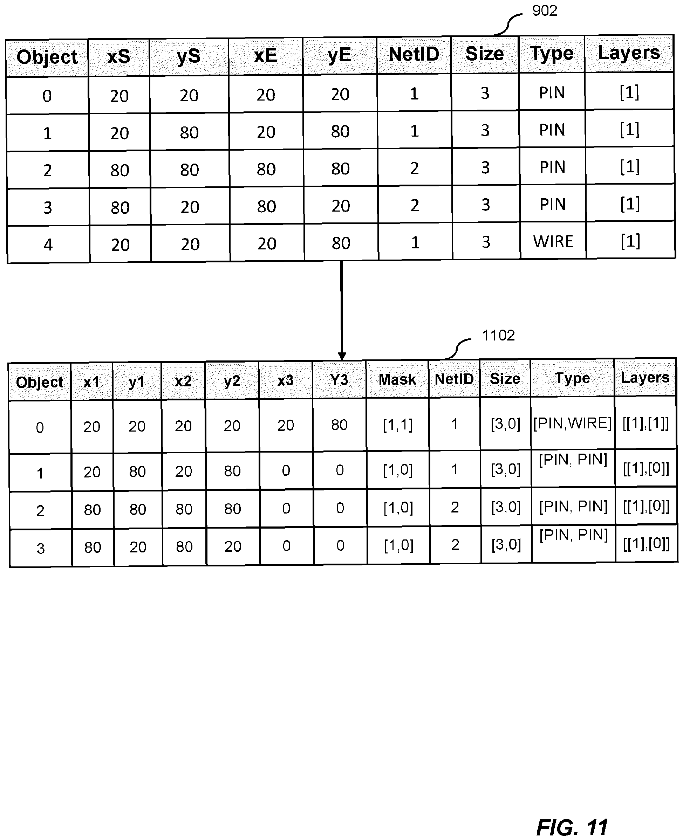

In some examples, the embedding layers 1004, 1010, and 1012 may involve collecting adjoining objects, including circuit elements and/or routing components, in a common net into groups, or "combined objects". Figure 11 shows an example in which the matrix representation 902 is processed to group adjoining objects in a first net, having NetID = 1, resulting in an updated representation 1102. In this case object "0" which is a circuit element (e.g. pin), and the object "4" which is a routing component (e.g. wire) are grouped into a single combined object in the matrix 1102. This pin and the wire have overlapping coordinates, and are located in the same net, and hence can be joined. While one circuit element and one routing component have been joined in this example, it is to be appreciated that larger groups of circuit elements and/or routing components may also be joined. For example, object "1", also in NetID = 1 could be joined with object "0" and object "1". In some examples, five or more adjoining circuit elements and/or routing components in a net may be combined in the matrix representation 1102.

A new data field "Mask" is introduced which indicates how many total objects, including circuit elements and routing components are represented in a given row. The other data in the matrix 902 are also updated to account for the combined objects. Specifically, additional coordinate columns may be added, and the dimensionality of the size, type, and layer information may be increased such that the characteristics of the different objects represented in a single row can be accurately represented. Three sets of coordinates are provided for each object, wherein for the combined object in the first row, the middle two coordinates (x2, y2) represent the coordinate at which the two objects are adjoined.

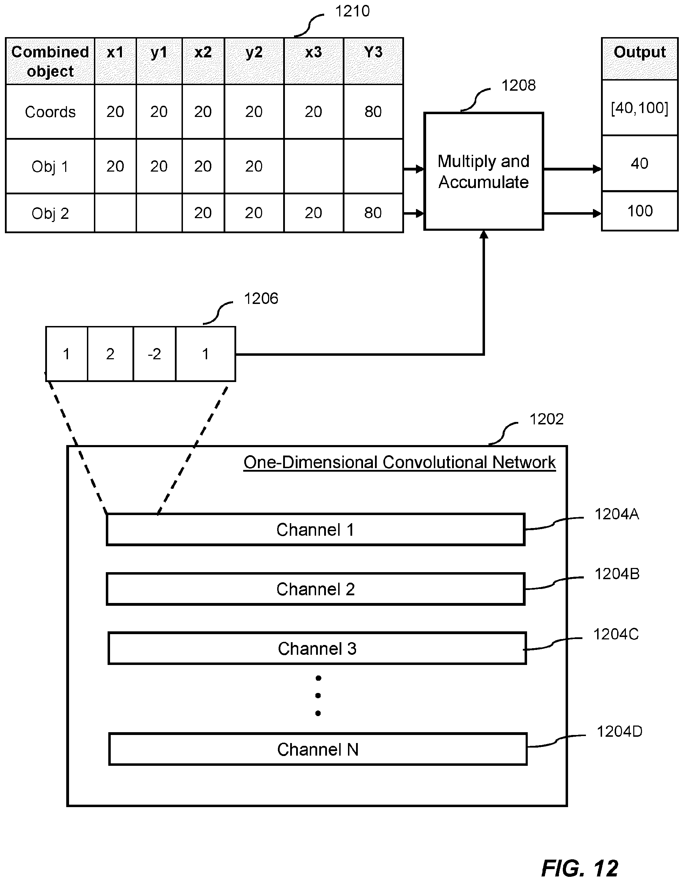

Processing the matrix representation using the first set of weight values 812, may be implemented according to the convolution operation 1008 applied to the embedded coordinates 1006. The convolution operation 1008 may involve convolving the embedded coordinates 1006, representing the objects, with one or more channels of a one-dimensional convolutional network. Figure 12 shows an example of applying convolutional network 1202 comprising a plurality of channels 1204A to 1204D. Each channel 1204A to 1204D may comprise a respective set of weight values. One example of a set of weight values 1206 for a first channel 1204A is shown. The coordinates of an object, in this case the coordinates of the combined object 1210, are convolved with the weight values 1206 of the first channel 1204A.

Convolving includes overlaying the weight values 1206 with the coordinates and performing a multiply accumulate operation 1208. The weight values 1206 are then moved according to a stride size and an additional multiply accumulate operation 1208 is performed. In the example shown, the first channel 1204A has four weight values 1206. Processing the coordinates using the weight values 1206 in this way provides a summed view of the object's coordinates. In this way, the coordinates representing the position of an object may be represented using a single value for each channel 1204A to 1204D.

Figure 12 shows the coordinates [20, 20, 20, 20, 20, 80] being convolved with the weight values [1, 2, -2, 1]. A first multiply accumulate operation 1208 between the first four coordinates and the weight values is performed, and results in 40. A second multiply accumulate operation 1208 is then performed with the last four coordinates and the weight values, and results in 100.

In the example shown, the combined object 1210 comprises two objects, and hence two values may be generated by processing the coordinates using the weight values 1206 of the first channel 1204A. This process may be repeated for each channel, so that each combined object is represented by a respective value, or set of values, for each channel. In some examples, there are 32 channels in the one-dimensional convolutional network 1202. It will be appreciated that the total number of channels 1204A to 1204D included in the convolutional network 1202 may be updated and/or modified. In some cases, where the convolutional matrix 1202 is applied to the embedded coordinates for single objects, a single multiply and accumulate operation may be applied such that one value is generated. Alternatively, two values may be generated for those single objects by using padding in the coordinate columns for which the single objects do not have defined coordinates.

The output of applying the convolutional network 1202 to the embedded coordinates provides a vector representation of the embedded coordinates 1010 suitable for being processed by the attention network 308. These vectors are then concatenated with other embedding information before being processed in the attention network 308.

Figure 13 shows an example of a process for generating the second encoding 306. Generating the second encoding 306 may similarly involve the use of coordinate embeddings. In this example, the coordinate embeddings 1302 may represent the positions of the agents in the electrical circuit which are to be used to select characteristics of the rouging components. The angle of the agents may also be embedded to generate embedded angles 1304, wherein the angle of an agent represents a current direction the agent is facing. As discussed above, the agents are used to select routing components for respective nets, and as routing components are sequentially selected by an agent the position and direction in which the agent is moving in the electrical circuit may be updated. The agent 316 may keep track of the direction in which it is facing by storing an indication of an angle selected by the agent for a routing component in a prior iteration of the process 312. The direction in which an agent 316 is facing will influence the subsequent selection of characteristics for a routing component. For example, to reduce the severity of turns or changes of direction in routing for an electrical circuit, agents may generally be configured to minimize the change in angle between sequentially selected characteristics of routing components.

The layer on which an agent is currently located may also be used and embedded 1306 when generating the second encoding 306. These embeddings may be flattened and concatenated 1308 to generate the second encoding 306. Although it is not shown, it will be appreciated that a number of additional processing techniques may be applied when generating the first encoding 304 and the second encoding 306 such as applying dense layers, normalization, and so forth. The various weight values used in the different functions shown in Figure 11 and Figure 13 may include the first and second sets of weight values that are updated according to the actual reward value.

As discussed above, the first attention mechanism and the second attention mechanism may be implemented according to any suitable architecture for the attention network 308. This may involve implementing separate self, or cross, attention mechanisms for each of the first encoding 304 and the second encoding 306 and combining the resulting attention scores. In other examples, a self-attention mechanism may be applied to one of the first encoding 304 or the second encoding 306 before cross attention scores between the first encoding 304 and the second encoding 306 are calculated.

A specific example of an attention network 308 for generating action selection data 310 is shown in Figure 14. In this example, the first encoding 304 and second encoding 306 are input to the attention network 308 and processed according to the first and second attention mechanisms 1402 to generate attention scores 1404. These attention scores 1404 are then augmented with first-person attention scores 1406 before a softmax function 1408 is applied to generate the final attention scores 1410.

The first-person attention, in this example, is used in a manner that is similar to the use of a positional encoding in decoding transformer models. Which is to say that the first-person attention scores 1406 may be used to augment the attention scores 1404 based on which objects and/or elements are near a given agent. A first-person attention encoding 1412 may be processed to generate first-person attention scores 1404 that cause the attention network 308, when generating action selection data 310 for a given agent, to adapt the amount of attention which is given to objects and/or agents that are nearby that given agent.

The final attention scores 1410 are applied 1416 to a value projection 1414 to generate a post attention encoding 1418 for the two or more agents. The post attention encoding 1418 for the two or more agents is then processed, for example, using one or more linear layers, to generate the action selection data 310 to be used by the first agent 316 to select characteristics of a routing component for a respective net.

It will be appreciated that, while a first-person attention mechanism 1420, as shown, may be used, other examples of the attention network 308 may not implement a first-person attention mechanism 1420, nor augment the attention scores 1404 with the first-person attention scores 1406.

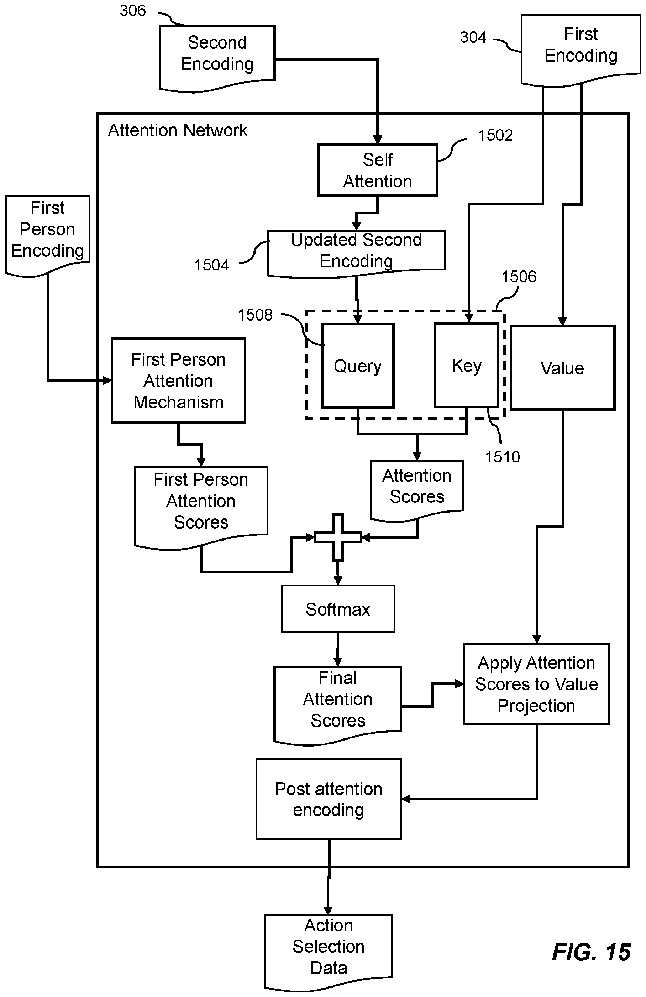

Figure 15 shows a more detailed example in which the second attention mechanism is implemented using a self-attention module 1502. In this example, the second encoding 306, associated with the two or more agents, is processed using the self-attention module 1502 to generate an updated second encoding 1504. The first attention mechanism is then implemented according to a cross attention module 1506 which is then applied to the updated second encoding 1504 and the first encoding 304 to generate the attention scores. In this example, the updated second encoding 1504 is used for the query 1508 in the cross-attention module 1506, while the first encoding 304 is used for the key 1510 in the cross-attention module.

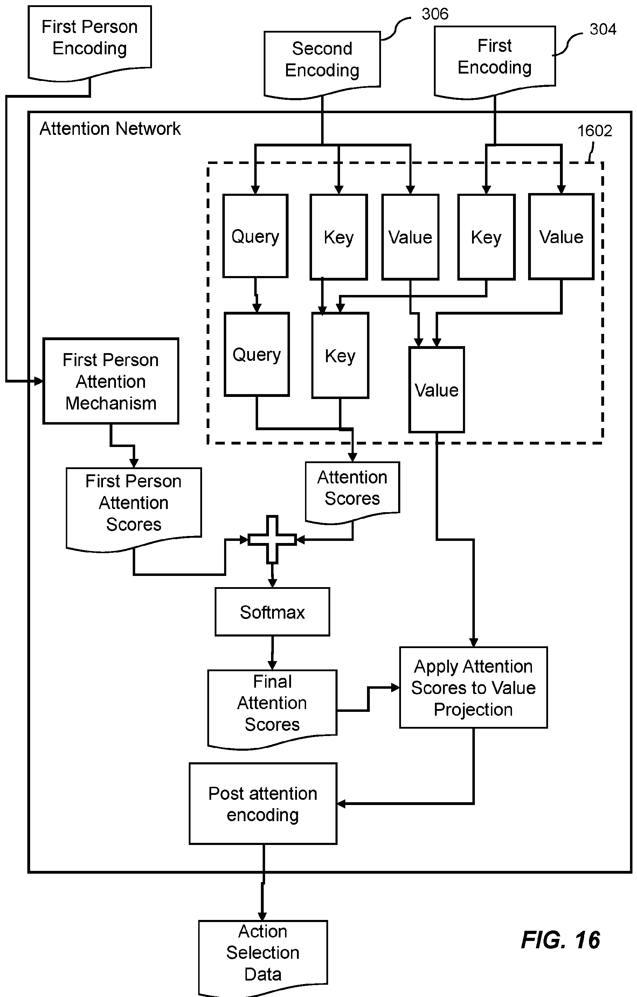

In the example of Figure 16, an alternative configuration is shown in which the first encoding 304 and the second encoding 306 are input to an attention module 1602 which implements both the first attention mechanism and the second attention mechanism in the attention network 308.

In the examples described above, only a single layer of the attention network 308 is shown. However, it will be appreciated that the attention network 308 may comprise a plurality of layers, wherein the post attention encoding 1408 is input to a subsequent layer and processed in a similar manner to that shown in the examples of Figures 14 to 16 to generate post attention encodings. In this case, the post attention encoding 1408 may be input to the subsequent layers and used as a second encoding 306 to be processed with the first encoding 304.

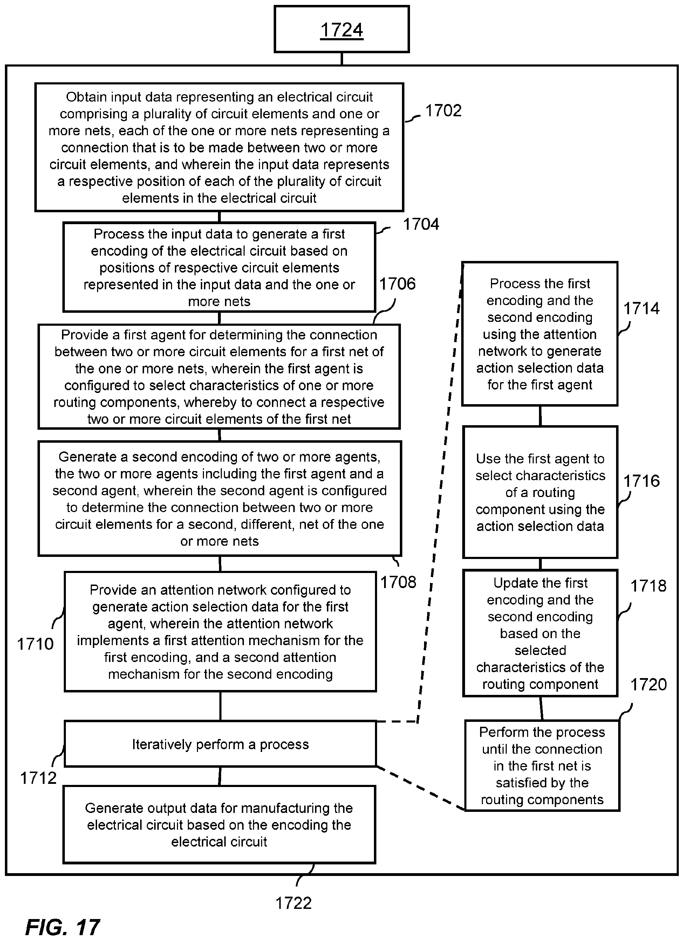

Figure 17 shows a non-transitory computer-readable storage medium 1700 comprising computer executable instructions 1702 to 1722 which, when executed by a processor 1724 cause the processor 1724 to implement the method 200 as described above according to the examples shown in Figures 2 to 16.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

Various aspects of the present disclosure are set out according to the following numbered clauses.

### Numbered Clauses

1. A method of generating output data for manufacturing an electrical circuit, the method comprising;
   obtaining input data representing an electrical circuit comprising a plurality of circuit elements and one or more nets, each of the one or more nets representing a connection that is to be made between two or more circuit elements, and wherein the input data represents a respective position of each of the plurality of circuit elements in the electrical circuit;
   processing the input data to generate a first encoding of the electrical circuit based on the positions of respective circuit elements represented in the input data and the one or more nets;
   providing a first agent for determining the connection between two or more circuit elements for a first net of the one or more nets, wherein the first agent is configured to select characteristics of one or more routing components, whereby to connect a respective two or more circuit elements of the first net;
   generating a second encoding of two or more agents, the two or more agents including at least the first agent and a second agent, wherein the second agent is configured to determine the connection between two or more circuit elements for a second, different, net of the one or more nets;
   providing an attention network configured to generate action selection data for the first agent, wherein the attention network implements a first attention mechanism for the first encoding, and a second attention mechanism for the second encoding;
   iteratively performing a process comprising:
      processing the first encoding and the second encoding using the attention network to generate action selection data for the first agent
      using the first agent to select characteristics of a routing component using the action selection data; and
      updating the first encoding and the second encoding based on the selected characteristics of the routing component,
      wherein the process is performed until the connection in the first net is satisfied by the routing components; and
   generating output data for manufacturing the electrical circuit based on the first encoding of the electrical circuit.
2. The method of clause 1, wherein the action selection data includes output probability values for a characteristic of a said routing component for the electrical circuit, and wherein the characteristic includes any one or more of:
   an angle for the routing component;
   a length of the routing component;
   a size of the routing component;
   a layer for the routing component; and
   a type for the routing component.
3. The method of clause 2, wherein the action selection data includes a probability distribution over a plurality of values for a respective characteristic of a said routing component.
4. The method of clause 3, wherein the probability distribution is a first probability distribution over a plurality of values for a first characteristic of the said routing component, and the action selection data includes a second probability distribution over a plurality of values for a second characteristic of the said routing component.
5. The method of any preceding clause, wherein the attention network is configured to generate a predicted reward value for the electrical circuit, and the process comprises:
   generating a predicted reward value; and
   storing the predicted reward value in association with a current state of the first encoding of the electrical circuit.
6. The method of clause 5, wherein the predicted reward value is associated with a performance of the electrical circuit with respect to one or more desired characteristics, the desired characteristics including any one or more of:
   a length of one or more connections in the electrical circuit;
   a number of vias used in the electrical circuit;
   a proportion of completed connections;
   a number of different angles associated with routing components for a given net;
   a measure of electrical isolation between nets in the electrical circuit;
   an area of one or more planes in the electrical circuit; and
   a number of plane islands in the electrical circuit.
7. The method of clause 5 or clause 6, wherein the predicted reward value is representative of a predicted performance of the electrical circuit with respect to one or more desired characteristics based on a current state of the first encoding of the electrical circuit.
8. The method of clause 5 or clause 6, wherein the predicted reward value is representative of a predicted performance of the electrical circuit with respect to one or more desired characteristics based on a current state of the first encoding of the electrical circuit and the action selection data.
9. The method of any one of clauses 5 to 8, wherein the process comprises updating the attention network based on the stored predicted reward value.
10. The method of any preceding clause, wherein the process comprises:
   generating an actual reward value representing a performance of the electrical circuit with respect to one or more desired characteristics; and
   updating the attention network based on the actual reward value.
11. The method of any one of clauses 5 to 10, wherein the method comprises:
   when the process ends, generating a finalised actual reward value representing a performance of the electrical circuit with respect to one or more desired characteristics; and
   updating the attention network based on the actual reward value and one or more stored predicted reward values.
12. The method of any one of clause 5 to 11, wherein generating the first encoding of the electrical circuit comprises processing at least part of the input data using a first set of weight values, generating the second encoding of two or more agents comprises processing a representation of the two or more agents using a second set of weight values, and wherein the method comprises:
   when the process ends, generating an actual reward value representing a performance of the electrical circuit with respect to one or more desired characteristics; and
   updating at least one of the first set of weight values and second set of weight values based on the actual reward value and one or more stored predicted reward values.
13. The method of any preceding clause, wherein processing the input data to generate the first encoding of the electrical circuit comprises:
   processing the input data to generate a matrix representation of the plurality of circuit elements, each circuit element being represented according to at least part of a row in the matrix representation and each row including an indication of coordinates for a respective circuit element and an indication of a net associated with the respective circuit element; and
   processing the matrix representation using one or more linear layers comprising a respective set of weight values to generate the first encoding of the electrical circuit.
14. The method of clause 13, wherein updating the first encoding of the electrical circuit comprises:
   updating the matrix representation based on the characteristics of a said routing component selected by the first agent using the action selection data; and
   processing the updated matrix representation using the one or more linear layers.
15. The method of clause 13 or clause 14, wherein prior to processing the matrix representation using the one or more linear layers, the method comprises:
   modifying the matrix representation by grouping two or more circuit elements that are to be connected, wherein grouping two or more circuit elements comprises concatenating data representing the two or more circuit elements in the matrix representation.
16. The method of any preceding clause, wherein generating the second encoding of the two or more agents comprises:
   determining respective coordinates of each of the two or more agents, wherein the coordinates of a said agent represent a position of the said agent with respect to the electrical circuit; and
   encoding at least the respective coordinates of each of the two or more agents.
17. The method of clause 14 wherein updating the second encoding based on the selected characteristics of the routing component comprises at least:
   updating coordinates of the first agent; and
   encoding at least the respective coordinates of each of the two or more agents, including the updated coordinates for the first agent.
18. The method of any preceding clause, wherein the method is repeated a predetermined number of times to generate a plurality of output data for manufacturing the electrical circuit, and the method further comprises selecting one of the plurality of output data for manufacturing the electrical circuit based on a respective reward value associated with the respective encoding of the electrical circuit.
19. A system for generating output data for manufacturing an electrical circuit, the system comprising at least one processor and storage comprising computer-executable instructions which, when executed by the at least one processor cause the at least one processor to:
   obtain input data representing an electrical circuit comprising a plurality of circuit elements and one or more nets, each of the one or more nets representing a connection that is to be made between two or more circuit elements, and wherein the input data represents a respective position of each of the plurality of circuit elements in the electrical circuit;
   process the input data to generate a first encoding of the electrical circuit based on positions of respective circuit elements represented in the input data and the one or more nets;
   provide a first agent for determining the connection between two or more circuit elements for a first net of the one or more nets, wherein the first agent is configured to select characteristics of one or more routing components, whereby to connect a respective two or more circuit elements of the first net;
   generate a second encoding one of two or more agents, the two or more agents including at least the first agent and a second agent, wherein the second agent is configured to determine the connection between two or more circuit elements for a second, different, net of the one or more nets;
   provide an attention network configured to generate action selection data for the first agent, wherein the attention network implements a first attention mechanism for the first encoding, and a second attention mechanism for the second encoding;
   iteratively perform a process comprising:
      process the first encoding and the second encoding using the attention network to generate action selection data for the first agent;
      use the first agent to select characteristics of a routing component using the action selection data; and
      update the first encoding and the second encoding based on the selected characteristics of the routing component,
      wherein the process is performed until the connection in the first net is satisfied by the routing components; and
   generating output data for manufacturing the electrical circuit based on the first encoding of the electrical circuit.
20. A non-transitory computer-readable storage medium comprising computer-executable instructions which, when executed by one or more processor, cause the processor to:
   obtain input data representing an electrical circuit comprising a plurality of circuit elements and one or more nets, each of the one or more nets representing a connection that is to be made between two or more circuit elements, and wherein the input data represents a respective position of each of the plurality of circuit elements in the electrical circuit;
   process the input data to generate a first encoding of the electrical circuit based on positions of respective circuit elements represented in the input data and the one or more nets;
   provide a first agent for determining the connection between two or more circuit elements for a first net of the one or more nets, wherein the first agent is configured to select characteristics of one or more routing components, whereby to connect a respective two or more circuit elements of the first net;
   generate a second encoding of two or more agents, the two or more agents including at least the first agent and a second agent, wherein the second agent is configured to determine the connection between two or more circuit elements for a second, different, net of the one or more nets;
   provide an attention network configured to generate action selection data for the first agent, wherein the attention network implements a first attention mechanism for the first encoding, and a second attention mechanism for the second encoding;
   iteratively perform a process comprising:
      process the first encoding and the second encoding using the attention network to generate action selection data for the first agent;
      use the first agent to select characteristics of a routing component using the action selection data, the routing component being for connecting two or more circuit elements in the respective net; and
      update the first encoding and the second encoding based on the selected characteristics of the component,
      wherein the process is performed until the connection in the first net is satisfied by the routing components; and
   generating output data for manufacturing the electrical circuit based on the first encoding of the electrical circuit.

## Claims

1. A method of generating output data for manufacturing an electrical circuit, the method comprising;
obtaining input data representing an electrical circuit comprising a plurality of circuit elements and one or more nets, each of the one or more nets representing a connection that is to be made between two or more circuit elements, and wherein the input data represents a respective position of each of the plurality of circuit elements in the electrical circuit;
processing the input data to generate a first encoding of the electrical circuit based on the positions of respective circuit elements represented in the input data and the one or more nets;
providing a first agent for determining the connection between two or more circuit elements for a first net of the one or more nets, wherein the first agent is configured to select characteristics of one or more routing components, whereby to connect a respective two or more circuit elements of the first net;
generating a second encoding of two or more agents, the two or more agents including at least the first agent and a second agent, wherein the second agent is configured to determine the connection between two or more circuit elements for a second, different, net of the one or more nets;
providing an attention network configured to generate action selection data for the first agent, wherein the attention network implements a first attention mechanism for the first encoding, and a second attention mechanism for the second encoding;
iteratively performing a process comprising:
processing the first encoding and the second encoding using the attention network to generate action selection data for the first agent
using the first agent to select characteristics of a routing component using the action selection data; and
updating the first encoding and the second encoding based on the selected characteristics of the routing component,
wherein the process is performed until the connection in the first net is satisfied by the routing components; and
generating output data for manufacturing the electrical circuit based on the first encoding of the electrical circuit.

2. The method of claim 1, wherein the action selection data includes output probability values for a characteristic of a said routing component for the electrical circuit, and wherein the characteristic includes any one or more of:
an angle for the routing component;
a length of the routing component;
a size of the routing component;
a layer for the routing component; and
a type for the routing component.

3. The method of claim 2, wherein the action selection data includes a probability distribution over a plurality of values for a respective characteristic of a said routing component, and
optionally, wherein the probability distribution is a first probability distribution over a plurality of values for a first characteristic of the said routing component, and the action selection data includes a second probability distribution over a plurality of values for a second characteristic of the said routing component.

4. The method of any preceding claim, wherein the attention network is configured to generate a predicted reward value for the electrical circuit, and the process comprises:
generating a predicted reward value; and
storing the predicted reward value in association with a current state of the first encoding of the electrical circuit,
wherein the predicted reward value is associated with a performance of the electrical circuit with respect to one or more desired characteristics, the desired characteristics including any one or more of:
a length of one or more connections in the electrical circuit;
a number of vias used in the electrical circuit;
a proportion of completed connections;
a number of different angles associated with routing components for a given net;
a measure of electrical isolation between nets in the electrical circuit;
n area of one or more planes in the electrical circuit; and
a number of plane islands in the electrical circuit.

5. The method of claim 4, wherein the predicted reward value is representative of a predicted performance of the electrical circuit with respect to one or more desired characteristics based on a current state of the first encoding of the electrical circuit and optionally, the action selection data.

6. The method of claim 4 or claim 5, wherein the process comprises updating the attention network based on the stored predicted reward value.

7. The method of any preceding claim, wherein the process comprises:
generating an actual reward value representing a performance of the electrical circuit with respect to one or more desired characteristics; and
updating the attention network based on the actual reward value.

8. The method of any one of claims 4 to 7, wherein the method comprises:
when the process ends, generating a finalised actual reward value representing a performance of the electrical circuit with respect to one or more desired characteristics; and
updating the attention network based on the actual reward value and one or more stored predicted reward values.

9. The method of any one of claim 4 to 8, wherein generating the first encoding of the electrical circuit comprises processing at least part of the input data using a first set of weight values, generating the second encoding of two or more agents comprises processing a representation of the two or more agents using a second set of weight values, and wherein the method comprises:
when the process ends, generating an actual reward value representing a performance of the electrical circuit with respect to one or more desired characteristics; and
updating at least one of the first set of weight values and second set of weight values based on the actual reward value and one or more stored predicted reward values.

10. The method of any preceding claim, wherein processing the input data to generate the first encoding of the electrical circuit comprises:
processing the input data to generate a matrix representation of the plurality of circuit elements, each circuit element being represented according to at least part of a row in the matrix representation and each row including an indication of coordinates for a respective circuit element and an indication of a net associated with the respective circuit element; and
processing the matrix representation using one or more linear layers comprising a respective set of weight values to generate the first encoding of the electrical circuit,
optionally, wherein updating the first encoding of the electrical circuit comprises:
updating the matrix representation based on the characteristics of a said routing component selected by the first agent using the action selection data; and
processing the updated matrix representation using the one or more linear layers
optionally, wherein updating the second encoding based on the selected characteristics of the routing component comprises at least:
updating coordinates of the first agent; and
encoding at least the respective coordinates of each of the two or more agents, including the updated coordinates for the first agent.

11. The method of claim 10, wherein prior to processing the matrix representation using the one or more linear layers, the method comprises:
modifying the matrix representation by grouping two or more circuit elements that are to be connected, wherein grouping two or more circuit elements comprises concatenating data representing the two or more circuit elements in the matrix representation.

12. The method of any preceding claim, wherein generating the second encoding of the two or more agents comprises:
determining respective coordinates of each of the two or more agents, wherein the coordinates of a said agent represent a position of the said agent with respect to the electrical circuit; and
encoding at least the respective coordinates of each of the two or more agents.

13. The method of any preceding claim, wherein the method is repeated a predetermined number of times to generate a plurality of output data for manufacturing the electrical circuit, and the method further comprises selecting one of the plurality of output data for manufacturing the electrical circuit based on a respective reward value associated with the respective encoding of the electrical circuit.

14. A system for generating output data for manufacturing an electrical circuit, the system comprising at least one processor and storage comprising computer-executable instructions which, when executed by the at least one processor cause the at least one processor to:
obtain input data representing an electrical circuit comprising a plurality of circuit elements and one or more nets, each of the one or more nets representing a connection that is to be made between two or more circuit elements, and wherein the input data represents a respective position of each of the plurality of circuit elements in the electrical circuit;
process the input data to generate a first encoding of the electrical circuit based on positions of respective circuit elements represented in the input data and the one or more nets;
provide a first agent for determining the connection between two or more circuit elements for a first net of the one or more nets, wherein the first agent is configured to select characteristics of one or more routing components, whereby to connect a respective two or more circuit elements of the first net;
generate a second encoding one of two or more agents, the two or more agents including at least the first agent and a second agent, wherein the second agent is configured to determine the connection between two or more circuit elements for a second, different, net of the one or more nets;
provide an attention network configured to generate action selection data for the first agent, wherein the attention network implements a first attention mechanism for the first encoding, and a second attention mechanism for the second encoding;
iteratively perform a process comprising:
process the first encoding and the second encoding using the attention network to generate action selection data for the first agent;
use the first agent to select characteristics of a routing component using the action selection data; and
update the first encoding and the second encoding based on the selected characteristics of the routing component,
wherein the process is performed until the connection in the first net is satisfied by the routing components; and
generating output data for manufacturing the electrical circuit based on the first encoding of the electrical circuit.

15. A non-transitory computer-readable storage medium comprising computer-executable instructions which, when executed by one or more processor, cause the processor to:
obtain input data representing an electrical circuit comprising a plurality of circuit elements and one or more nets, each of the one or more nets representing a connection that is to be made between two or more circuit elements, and wherein the input data represents a respective position of each of the plurality of circuit elements in the electrical circuit;
process the input data to generate a first encoding of the electrical circuit based on positions of respective circuit elements represented in the input data and the one or more nets;
provide a first agent for determining the connection between two or more circuit elements for a first net of the one or more nets, wherein the first agent is configured to select characteristics of one or more routing components, whereby to connect a respective two or more circuit elements of the first net;
generate a second encoding of two or more agents, the two or more agents including at least the first agent and a second agent, wherein the second agent is configured to determine the connection between two or more circuit elements for a second, different, net of the one or more nets;
provide an attention network configured to generate action selection data for the first agent, wherein the attention network implements a first attention mechanism for the first encoding, and a second attention mechanism for the second encoding;
iteratively perform a process comprising:
process the first encoding and the second encoding using the attention network to generate action selection data for the first agent;
use the first agent to select characteristics of a routing component using the action selection data, the routing component being for connecting two or more circuit elements in the respective net; and
update the first encoding and the second encoding based on the selected characteristics of the component,
wherein the process is performed until the connection in the first net is satisfied by the routing components; and
generating output data for manufacturing the electrical circuit based on the first encoding of the electrical circuit.
